(19) **Europäisches Patentamt / European Patent Office / Office européen des brevets**

(11) **EP 4 260 307 B1**

(12) **EUROPÄISCHE PATENTSCHRIFT**

(45) Veröffentlichungstag und Bekanntmachung des Hinweises auf die Patenterteilung:
**07.01.2026  Patentblatt 2026/02**

(21) Anmeldenummer: **21827594.9**

(22) Anmeldetag: **24.11.2021**

(51) Internationale Patentklassifikation (IPC):
*G08G 1/16* (2006.01)    *B60Q 9/00* (2006.01)

(52) Gemeinsame Patentklassifikation (CPC):
**B60Q 9/002**

(86) Internationale Anmeldenummer:
**PCT/DE2021/200200**

(87) Internationale Veröffentlichungsnummer:
**WO 2022/122090 (16.06.2022 Gazette 2022/24)**

(54) **VERFAHREN ZUR DETEKTION UND WARNUNG VOR EINER VERÄNDERTEN UMGEBUNG**

METHOD FOR DETECTING AND PROVIDING A WARNING ABOUT CHANGED SURROUNDINGS

PROCÉDÉ DE DÉTECTION ET D'AVERTISSEMENT EN TERMES D'ENVIRONNEMENT CHANGEANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.12.2020  DE 102020215463**

(43) Veröffentlichungstag der Anmeldung:
**18.10.2023  Patentblatt 2023/42**

(73) Patentinhaber: **AUMOVIO Autonomous Mobility Germany GmbH**
**85057 Ingolstadt (DE)**

(72) Erfinder: **FERNKORN, Georg**
**90411 Nürnberg (DE)**

(74) Vertreter: **Aumovio Corporation**
**AUMOVIO Germany GmbH**
**Taunusstraße 36**
**80807 München (DE)**

(56) Entgegenhaltungen:
DE-A1- 102012 014 939     DE-A1- 102018 222 683
US-A1- 2019 111 835

**Beschreibung**

Die Erfindung betrifft Verfahren zum Erkennen von Änderungen einer Umgebung eines Fahrzeugs, ein entsprechendes Fahrerassistenzsystem und ein Fahrzeug umfassend das Fahrerassistenzsystem.

Das Ein- und Ausparken eines Fahrzeugs birgt eine große Gefahr für alle Verkehrsteilnehmer. Trotz der erhöhten Ausstattungsrate der Fahrzeuge mit Sensorik und Fahrerassistenzsystemen (z. B. Ultraschallsensoren, Rückfahrkamera, Surround-View-Kamera, Abstandswarnung usw.) bleibt die Anzahl von Unfällen mit tödlichen Folgen oder Verletzungen bzw. Sachschäden beim Ein- und Ausparken nahezu unverändert hoch. Neben der Gefahr für Körper und Leben von Menschen und Tieren, sowie erheblichen Sachschäden stellt dies auch einen hohen Kostenfaktor dar.

Es liegt zum einen am Verhalten der Fahrer, zum anderen jedoch auch an der Art und Weise welche Daten den Fahrerassistenzsystemen durch Sensoren der Fahrzeuge zur Verfügung stehen, um die Fahrer vor Kollisionen mit Objekten wie anderen Fahrzeugen, Menschen und Tieren zu warnen, sowie an der Art der Warnung, dass trotz der steigenden Anzahl an verbauter Sensorik die Zahl der Unfälle beim Ein- und Ausparken nicht zurückgehen.

Teilweise werden nicht einsehbare Bereiche um das Fahrzeug herum, wie tote Winkel seitlich des Fahrzeugs, nicht einsehbarer Bereich unmittelbar vor dem Fahrzeug (Größe des Bereiches steigt mit Größe des Fahrzeuges), nicht einsehbarer Bereich unmittelbar hinter dem Fahrzeug (Größe des Bereiches steigt mit Größe des Fahrzeuges), nicht einsehbarer Bereich unmittelbar unter dem Fahrzeug usw., von den Fahrern nicht vor Fahrtbeginn überprüft. Auch erfolgt teilweise keine Kontrolle der Umgebung vor dem Einstieg in das parkende Fahrzeug, also keine Kontrolle der Umgebung vor Beginn der Fahrt. Des Weiteren werden die Warnungen durch aktuelle Fahrerassistenzsysteme (z. B. Park-Distance-Control) nicht wahrgenommen, bzw. nicht berücksichtigt, da Fahrer, wenn ihr Fahrzeug in einer engen Parklücke steht, wissen, dass sie sich sehr nah an diversen Objekten befinden und deswegen die z. B. durchgängige akustische Warnung des Fahrerassistenzsystems nicht beachten (man glaubt zu wissen, dass diese Warnung lediglich durch die bekannte Umgebung erzeugt wird).

Zudem erfolgt nur eine Wahrnehmung von Abständen zu Objekten durch bekannte Sensorik bzw. Fahrerassistenzsysteme während der Zeit in der das Fahrzeug stillsteht bzw. während des ausgeschalteten Fahrzeugzustandes, sodass bestimmte Änderungen der Umgebung des Fahrzeugs nicht erkannt werden. Wenn beispielsweise ein Fahrzeug (remote) eingeparkt wird (Fahrer befindet sich außerhalb des Fahrzeuges und aktiviert den Parkvorgang über ein Smartphone, einen intelligenten Fahrzeugschlüssel o. Ä.), kennt weder der Fahrer, insbesondere wenn er manuell ausparkt, noch das Fahrzeug selbst die tatsächliche Umgebung des Fahrzeugs, denn autonom parkende Fahrzeuge kennen nur den Zustand der Umgebung direkt nach Beendigung des Parkens und kurz vor Start des Ausparkens. Bei wechselnden Fahrern, wie insbesondere bei Car-Sharing, wird ein durch einen anderen Fahrer geparktes Fahrzeug genutzt, wobei die Umgebung, welche beim Parkvorgang des vorherigen Fahrers vorlag, dem neuen Fahrer und auch dem Fahrzeug selbst zum Zeitpunkt des Ausparkens unbekannt ist.

Druckschrift DE 10 2018 222 683 A1 beschreibt ein Verfahren zum Erstellen einer Umgebungsrepräsentationskarte zur Überwachung eines Fahrzeugs und/oder eines Fahrzeuganhängers unter Verwendung eines Kamerasystems. Dazu wird eine Mehrzahl von Bildsignalen eingelesen, welche eine Abbildung einer Umgebung des Fahrzeugs und/oder des Fahrzeuganhängers repräsentieren. Ferner werden Objekte in den Abbildungen der Fahrzeugumgebung unter Verwendung der eingelesenen Bildsignale erkannt und identifiziert Außerdem werden die Objekte und/oder eine Position der Objekte in Bezug zu dem Fahrzeug und/oder dem Fahrzeuganhänger gespeichert, um eine Umgebungsrepräsentationskarte zur Überwachung des Fahrzeugs und/oder des Fahrzeuganhängers zu erstellen. Die Umgebungsrepräsentationskarte wird zum Erkennen des unbefugten Öffnens des Fahrzeugs und/oder Fahrzeuganhängers verwendet. Bei einer Abweichung zwischen dem aktuellen Umfeld von einer Referenz, welche größer als ein Schwellwert ist, wird ein Warnsignal ausgegeben, bei welchem es sich um einen von einer Warneinrichtung des Fahrzeugs ausgegebenen Alarm handelt.

DE 10 2012 014 939 A1 beschreibt ein Kollisionsvermeidungsverfahren, bei dem mittels eines Umfeldsensors eines Fahrzeugs bei Stillstand des Fahrzeugs eine Bewegung eines Objekts relativ zu dem Fahrzeug zumindest in einem Teilgebiet des Umfelds des Fahrzeugs erfasst wird, wobei der Teilbereich einen Öffnungsbereich einer Fahrzeugtür umfasst. Wird nach dem Abstellen des Fahrzeugs ermittelt, dass bei einem Öffnen der Tür durch einen sich im Fahrzeug befindlichen Fahrer eine Kollision der Fahrzeugtür mit einem sich im Teilbereich befindlichen Objekt droht, wird ein Warnsignal ausgegeben.

In US 2019/111835 A1 wird ein System beschrieben, welches ein geparktes Fahrzeug vor Kollisionen schützt. Dazu werden Umgebungssensoren des Fahrzeugs verwendet, um an das geparkte Fahrzeug herannahende Objekte zu ermitteln. Bei einem mit zu hoher Geschwindigkeit und/oder sich in einem zu geringen Abstand zum geparkten Fahrzeug befindlichen Fremdfahrzeug wird eine hörbare und sichtbare Warnung an den Fahrer des Fremdfahrzeugs ausgegeben.

Da sich oftmals die Fahrzeugumgebung während der Abwesenheit des Fahrers bzw. während des Fahrerwechsels ändern kann (z. B. durch Wechsel der im Umkreis befindlichen parkenden Fahrzeuge, sich bewegende Gegenstände wie vom Wind verwehte Gegenstände und Blätter oder ins Umfeld gerollte / gefallene Gegenstände, vorbeigehende / fahrende Menschen, Tiere oder sonstige Objekte, Bewegung des (Ego-)Fahrzeuges usw.), ohne dass diese Umgebungsänderung wahrgenommen wird, werden nach wie vor Objekte (insbesondere Kinder, Tiere, Rollstuhlfahrer usw.) beim Ausparken übersehen und von dem Fahrzeug erfasst. Des Weiteren können Objekte, die sich während des Stillstandes in das Fahrzeug bewegt haben (z. B. Marder im Motorraum), bisher mit bestehender Sensorik kaum detektiert werden, da diese nicht den zeitlichen Verlauf von Bewegungen aufzeichnet.

Somit treten auch heutzutage viele Unfälle beim Ein- und Ausparken auf, wobei sogar zum Teil tödliche Unfälle durch Überrollen (z.B. Überfahren von besonders stark gefährdeten Verkehrsteilnehmern wie Kindern, Rollstuhlfahrer oder Tieren) nicht selten sind. Zudem entstehen Schäden und Kosten durch Schäden am bzw. im Fahrzeug durch z. B. Nagetiere.

Daher ist es die Aufgabe der vorliegenden Erfindung die zuvor genannten Nachteile und Probleme zu beseitigen oder zumindest zu lindern. Dazu stellt die vorliegende Erfindung ein Verfahren zum Erkennen von Änderungen einer Umgebung eines Fahrzeugs gemäß dem unabhängigen Anspruch 1, sowie ein entsprechendes Fahrerassistenzsystem und ein Fahrzeug umfassend das Fahrerassistenzsystem gemäß den weiteren unabhängigen Ansprüchen bereit. Vorteilhafte Ausgestaltungen und Weiterbildungen sind Gegenstand er entsprechenden abhängigen Ansprüche.

Gemäß einem ersten Aspekt der vorliegenden Erfindung umfasst ein Verfahren zum Erkennen von Änderungen einer Umgebung eines Fahrzeugs die folgenden Schritte:

> a) Kontinuierliches Erzeugen oder Empfangen von Umgebungsdatensätzen während das Fahrzeug stillsteht.
> b) Kontinuierliches Berechnen einer momentanen Umgebungsänderung $\Delta^t$ durch kontinuierliches Vergleichen des momentan im Stillstand erzeugten oder empfangenen Umgebungsdatensatzes mit einem gespeicherten Umgebungsdatensatz, welcher im Moment des Stillstehens des Fahrzeugs erzeugt oder empfangen und gespeichert wurde.
> c) Bereitstellen eines Änderungswarnsignals, wenn die berechnete momentane Umgebungsänderung $\Delta^t$ einen vordefinierten Änderungsgrenzwert $\Delta_{lim}$ überschreitet, $\Delta^t > \Delta_{lim}$.

Die Schritte des Verfahrens können in beliebiger, sinnvoller Reihenfolge ausgeführt werden. Dabei werden die einzelnen Schritte des Verfahrens kontinuierlich, also wiederholt mit einer gemeinsamen Taktrate oder für jeden der Schritte verschiedenen vordefinierten Taktraten ausgeführt.

Gemäß einem zweiten Aspekt der vorliegenden Erfindung umfasst ein Fahrerassistenzsystem zum Erkennen von Änderungen einer Umgebung eines Fahrzeugs Mittel zum Ausführen der Schritte des Verfahrens gemäß dem ersten Aspekt der vorliegenden Erfindung.

Das Fahrerassistenzsystem kann als Datenverarbeitungseinrichtung, wie beispielsweise Mikrocontroller (μC), integrierte Schaltung, anwendungsspezifische integrierte Schaltung (Application-Specific Integrated Circuit, ASIC), anwendungsspezifisches Standardprodukt (Application-Specific Standard Product, ASSP), digitaler Signalprozessor (DSP), im Feld programmierbare (Logik-)Gatter-Anordnung (Field Programmable Gate Arrays, FPGA) und dergleichen, ausgestaltet sein. Das Fahrerassistenzsystem kann insbesondere ein Schnittstellenmodul, ein Vergleichsmodul und ein Änderungswarnungsmodul umfassen. Das Schnittstellenmodul kann ausgebildet sein, Umgebungsdatensätze kontinuierlich zu empfangen, während das Fahrzeug stillsteht (Schritt a)). Das Vergleichsmodul kann ausgebildet sein, eine momentane Umgebungsänderung durch kontinuierliches Vergleichen des momentan im Stillstand empfangenen Umgebungsdatensatzes mit einem gespeicherten Umgebungsdatensatz, welcher im Moment des Stillstehens des Fahrzeugs empfangen und gespeichert wurde, zu berechnen (Schritt b)). Das Änderungswarnungsmodul kann ausgebildet sein, ein Änderungswarnsignal bereitzustellen, wenn die berechnete momentane Umgebungsänderung einen vordefinierten Änderungsgrenzwert überschreitet (Schritt c)). Dabei können die Module Softwaremodule, die von dem Fahrerassistenzsystem ausgeführt werden, oder miteinander kommunikativ verbundene Datenverarbeitungseinrichtungen oder eine Kombination daraus sein.

Gemäß einem dritten Aspekt der vorliegenden Erfindung umfasst ein Fahrzeug das Fahrerassistenzsystem gemäß dem zweiten Aspekt der vorliegenden Erfindung.

Der Begriff kontinuierlich wird im Zusammenhang dieser Erfindung so verstanden, dass eine Aktion wiederholt, insbesondere mit einer vordefinierten Abtastrate oder Taktrate ausgeführt wird. Der Begriff "kontinuierlich" wird also als "zu vorbestimmten Zeitpunkten" und insbesondere als "jeweils nach einem vordefinierten Zeitintervall" verstanden. Ein kontinuierlich ausgeführter Schritt wird demnach verstanden als ein Schritt, der zu bestimmten, vordefinierten Zeitpunkten oder jeweils nach Ablauf eines vordefinierten Zeitintervalls also mit vordefinierter Abtastrate / Taktrate ausgeführt wird.

Mittels der vorliegenden Erfindung erfolgt eine Überwachung des Umfeldes während das (Ego-)Fahrzeug stillsteht (z. B. ausgeschaltet, geparkt usw.). Dazu kann eigene Fahrzeugsensorik (interne Sensoren, z. B. Ultraschallsensoren, Kameras, LIDAR usw.) des (Ego-) Fahrzeugs und zusätzlich oder alternativ externe Informationen externer Entitäten, wie (intelligenter) Infrastruktur (z. B. Verkehrskameras usw.), Verkehrsdrohnen, andere Fahrzeuge und dergleichen, die drahtlos (z. B. per Funk) an das (Ego-)Fahrzeug übertragen werden, herangezogen werden. Während des Fahrzeugstillstands werden kontinuierlich Umgebungsdatensätze empfangen. Die empfangenen Umgebungsdatensätze enthalten Informationen über die Umgebung bzw. das Umfeld des (Ego-)Fahrzeugs. Insbesondere Abstände von das (Ego-)Fahrzeug umgebenden Objekten zu einer Karosserie des (Ego-)Fahrzeugs können in den empfangenen Umgebungsdatensätzen enthalten sein. Somit enthalten die empfangenen Umgebungsdatensätze Informationen darüber, wie die Umgebung des (Ego-)Fahrzeugs aussieht. Dabei können Informationen über die Umgebung des Fahrzeugs in der horizontalen Ebene (vorne, hinten, links rechts) und zusätzlich oder alternativ in der vertikalen Richtung (unten, oben) von den empfangenen Umgebungsdatensätzen umfasst sein. Beispielsweise kann jeder empfangene Umgebungsdatensatz die jeweiligen momentanen (senkrechten) Abstände ($d_i^t$) von mehreren das (Ego-)Fahrzeug umgebenden Objekten (i) zu der Karosserie des Fahrzeugs umfassen.

Die bei der Überwachung der Umgebung des Fahrzeugs im Stillstand empfangenen Umgebungsdatensätze werden jeweils mit dem gespeicherten Umgebungsdatensatz (Referenz), der zum Zeitpunkt des Stillstands bzw. des Abstellens des Fahrzeuges erstellt wurde, verglichen, insbesondere zum Start des Fahrzeuges oder Beginn der Fahrt (z. B. Beginn des Ausparkens). Der als Referenz gespeicherte Umgebungsdatensatz kann insbesondere in einem ersten Speicher gespeichert sein, während die kontinuierlich empfangenen momentanen Umgebungsdatensätze in einem zweiten Speicher, insbesondere einem Ringspeicher (vgl. FIFO-Speicher) gespeichert werden können. Durch den Vergleich, insbesondere Subtraktion, des momentan empfangenen Umgebungsdatensatzes (z. B. mehrere momentane senkrechte Abstände von Objekten zu der Karosserie des (Ego-)Fahrzeugs) mit dem gespeicherten Umgebungsdatensatz (z. B. gespeicherte senkrechte Abstände der Objekte zu der Karosserie des (Ego-)Fahrzeugs) wird die momentane Umgebungsänderung $\Delta^t$ berechnet. Die momentane Umgebungsänderung $\Delta^t$ kann insbesondere die momentanen Abstandsänderungen mehrerer Objekte zu der Karosserie des (Ego-)Fahrzeugs im Vergleich zum Zeitpunkt des Stillstands umfassen.

Falls eine signifikante Änderung der Umgebung im Vergleich zum Zeitpunkt des Stillstands (z. B. Ende des Einparkens) erfolgt ist, die ggf. eine Kollisionsgefahr darstellt (z. B. Kind befindet sich direkt vor der Motorhaube des Fahrzeugs), wird das Änderungswarnsignal bereitgestellt. Das Änderungswarnsignal ist unabhängig von anderen Warnsignalen wie beispielsweise einem Warnsignal einer Park-Distance-Control des (Ego-)Fahrzeugs. Dabei wird mittels des vordefinierten Änderungsgrenzwerts $\Delta_{lim}$ vorgegeben, ab wann eine Umgebungsänderung signifikant ist. Wenn die berechnete momentane Umgebungsänderung $\Delta^t$ größer ist als der vordefinierte Änderungsgrenzwert $\Delta_{lim}$, wird das Änderungswarnsignal ausgegeben. Dabei kann der vordefinierte Änderungsgrenzwert $\Delta_{lim}$ eine vordefinierte Länge (z.

B. 30 cm [Zentimeter]), insbesondere für jede Hauptrichtung eine vordefinierte Länge (z. B. 30 cm für vorne und hinten, 50 cm für links und rechts) sein. Verschiebt sich also beispielsweise ein Objekt seit dem Stillstand des Fahrzeugs, um mehr als den vordefinierten Abstandsgrenzwert $\Delta_{lim}$ (senkrecht) auf das Fahrzeug bzw. dessen Karosserie zu, wird das Änderungswarnsignal bereitgestellt. Das Änderungswarnsignal ist ein Kommunikationssignal und kann beispielsweise ein elektrisches Signal (Impuls, steigende / fallende Flanke, Pulsweitenmodulation (PWM) usw.) sein, aufgrund dessen beispielsweise von einer Steuereinheit des (Ego-)Fahrzeugs eine Warnung (z. B. optische Warnung) an den Fahrer des (Ego-)Fahrzeugs ausgegeben werden kann.

Der Änderungsgrenzwert kann darüber hinaus situationsbedingt gewählt werden. Beispielsweise im Fall der Nutzung eines Anhängers vergrößern sich die Abstandsgrenzwerte nach hinten da nun auch Bereiche weit hinter der Stoßstange kritisch sind, da sie vom Anhänger überrollt werden könnten. Hier ist auch eine Kombination mit bestehenden Fahrassistenzsystemen (z. B. Trailer Assist) möglich, um das Vorhandensein eines Anhängers zu detektieren bzw. um ggf. als Eingangsgröße für den Trailer Assist und den entsprechenden Lenkempfehlungen zu dienen.

Ist beispielsweise das (Ego-)Fahrzeug in einer engen Parklücke eingeparkt, sodass die Park-Distance-Control eine kontinuierliche akustische Warnung, aufgrund der die enge Parklücke begrenzenden Objekte (z. B. vorderes Fahrzeug) ausgibt und befindet sich zum Zeitpunkt des Ausparkens ein neues Objekt (z. B. Kind oder Tier) direkt an der Motorhaube des (Ego-Fahrzeugs), so ändert sich die kontinuierliche akustische Warnung der Park-Distance-Control nicht. Fährt der Fahrer dennoch nach vorne, da er davon ausgeht, dass nur das ihm bekannte nahe Objekt (vorderes Fahrzeug) sich vor der Motorhaube befindet, kommt es zum Zusammenstoß mit dem neuen Objekt (Kind / Tier). Mittels der vorliegenden Erfindung wird zusätzlich zu der kontinuierlichen akustischen Warnung durch die Park-Distance-Control beim Ausparken das Änderungswarnsignal bereitgestellt, aufgrund dessen eine separate Warnung (z. B. optische Warnung, andere Akustische Warnung usw.) an den Fahrer ausgegeben und dieser somit auf die Umgebungsänderung effektiv aufmerksam gemacht werden.

Sollte der Änderungsgrenzwert bis zum Start des Fahrzeuges wieder unterschritten werden, kann das System eine Warnung entweder verwerfen oder dem Fahrer signalisieren, dass sich zwischen dem Zeitpunkt des Abstellens und Neustarts eine signifikante Änderung ergab, die unter Umständen noch bestehen könnte. Dies ist insbesondere hilfreich, falls Objekte in den Motorraum des Fahrzeuges eingedrungen sind.

Somit bietet die vorliegende Erfindung eine zusätzliche Warnfunktionalität neben bekannten Fahrerassistenzsystemen wie der Park-Distance-Control, welche den Fahrer nur auf geringe Abstände des (Ego-)Fahrzeugs bzw. dessen Karosserie zu Objekten, jedoch nicht auf Änderungen der Umgebung des (Ego-)Fahrzeugs aufmerksam machen. Es werden daher Blind-Spots und nicht einsehbare Bereiche um das Fahrzeug effektiver überwacht und es können rechtzeitig zusätzliche Warnungen basierend auf dem bereitgestellten Änderungswarnsignal für den Fahrer ausgegeben werden. Weiterhin können technische Beschränkungen (z. B. geringe Auflösung von Ultraschallsensoren im Nahfeld) aufgehoben oder ausgeglichen werden. Dadurch können Unfälle insbesondere beim Ausparken effektiv vermieden werden, da Gefahren erkannt werden, welche nicht durch den Fahrer selbst wahrgenommen (nicht bewusst oder nicht einsehbar) oder welche auf Grund von (technischen oder baulichen) Beschränkungen nicht ausreichend erfasst werden können. Insbesondere bei Car-Sharing, wo der Fahrer das Fahrzeug lediglich abholt, jedoch nicht weiß, wie die Umgebung zum Zeitpunkt des Abstellens ausgesehen hat und ob sich durch Veränderungen der Umgebung im Vergleich zum Zeitpunkt des Abstellens eine Gefahr ergeben haben könnte. Zudem wird die vorhandene Fahrzeugsensorik bzw. deren bereitgestellte Informationen über die Umgebung des (Ego-)Fahrzeugs effektiver genutzt und zukünftige Funktionalitäten wie beispielsweise automatisch öffnende Türen besser unterstützt.

Gemäß einer Weiterbildung der vorliegenden Erfindung werden (in dem Schritt a)) die Umgebungsdatensätze empfangen und (in dem Schritt b)) die momentane Umgebungsänderung $\Delta^t$ berechnet, während eine Zündung des Fahrzeugs abgeschaltet ist und zusätzlich oder alternativ während das Fahrzeug (von außen) verschlossen ist.

Auch während das (Ego-)Fahrzeug still steht bzw. abgestellt (Geschwindigkeit = 0) und abgeschaltet ist, also dessen Zündung abgeschaltet ist, bzw. während das Fahrzeug verschlossen ist, werden die Umgebungsdatensätze (kontinuierlich) empfangen und somit Informationen über die Umgebung des Fahrzeugs gesammelt. Die bei abgeschaltetem / verschlossenem (Ego-)Fahrzeug empfangenen Umgebungsdatensätze werden sodann mit dem gespeicherten Umgebungsdatensatz (Referenz) (kontinuierlich) verglichen und dabei die momentane Umgebungsänderung $\Delta^t$ (kontinuierlich) berechnet.

Somit kann direkt beim Starten des (Ego-)Fahrzeugs, also beim Einschalten von dessen Zündung oder auch beim Öffnen des Fahrzeuges (wenn der Fahrer noch nicht im Fahrzeug befindlich ist), das Änderungswarnsignal bereitgestellt werden, sofern die momentane Umgebungsänderung $\Delta^t$ größer ist als der vordefinierte Änderungsgrenzwert $\Delta_{lim}$. Dadurch wird sichergestellt, dass der Fahrer umgehend beim Anlassen des (Ego-)Fahrzeugs vor einer veränderten Fahrzeugumgebung gewarnt werden kann.

Gemäß einer Weiterbildung der vorliegenden Erfindung werden (in dem Schritt a)) die Umgebungsdatensätze von wenigstens einem internen Sensor des Fahrzeugs und zusätzlich oder alternativ von wenigstens einer externen Entität empfangen.

Die Umgebungsdatensätze werden von dem wenigstens einen internen Sensor des (Ego-)Fahrzeugs (z. B. Ultraschallsensor, Kamera, LIDAR-Sensor usw.) empfangen. Der wenigstens eine interne Sensor liefert Informationen über die Umgebung aus der Perspektive des (Ego-)Fahrzeugs (z. B. Abstände von Objekten zu dem Sensor, der an der Karosserie des (Ego-)Fahrzeugs angebracht sein kann).

Zusätzlich oder alternativ werden die Umgebungsdatensätze von der wenigstens einen externen Entität, insbesondere mittels kooperativer V2X-Nachrichten (vehicle-to-everything-Nachrichten) drahtlos empfangen. Die wenigstens eine externe Entität kann intelligente Infrastruktur (z. B. Verkehrskamera usw.), eine Verkehrsdrohne, ein anderes Fahrzeug und dergleichen sein. Die wenigstens eine externe Entität liefert Informationen über die Umgebung aus einer von dem (Ego-)Fahrzeug verschiedenen Perspektive (z. B. beobachtete Abstände von Objekten zu der Karosserie des (Ego-)Fahrzeugs aus einer gewissen Entfernung beobachtet, sodass die tatsächlichen Abstände mittels Projektion aus den beobachteten Abständen berechnet werden müssen).

Dabei kann eine kooperative Abstimmung zwischen dem (Ego-)Fahrzeug und einer oder mehreren externen Entitäten wie externen Fahrzeugen erfolgen. Wenn beispielsweise ein externes Fahrzeug bzw. dessen Sensorik ein Objekt wahrgenommen hat, prüft das (Ego-)Fahrzeug, ob es dieses Objekt mit seiner Sensorik auch wahrgenommen hat und gibt eine entsprechende Rückmeldung an das externe Fahrzeug aus. Anschließend verfolgt das (Ego-)Fahrzeug das Objekt dann selbstständig mittels seiner eigenen Sensorik. Ebenso sendet das (Ego-)Fahrzeug beispielsweise an externe Entitäten (z. B. umgebende externe Fahrzeuge), dass ein Objekt in seiner Umgebung getrackt wurde, nun aber außerhalb des Sichtfeldes seiner internen Sensorik ist. Ein externes Fahrzeug kann sodann das Tracking des besagten Objekts bis zu einer vordefinierten Entfernung (gefährlicher Raum) übernehmen. Sobald besagtes Objekt den Bereich verlässt, erfolgt eine Rückmeldung an das (Ego-)Fahrzeug, dass sich das Objekt außerhalb der vordefinierten Entfernung befindet.

Durch die Nutzung der Umgebungsdatensätze des wenigstens einen fahrzeugeigenen Sensors können die Umgebungsdatensätze schnell und einfach abgerufen werden. Durch die Nutzung der Umgebungsdatensätze der wenigstens einen externen Entität können Änderungen der Fahrzeugumgebung auch für (Ego-)Fahrzeuge ohne, mit ausgeschalteter oder mit defekter Sensorik bereitgestellt bzw. die Umgebungsdatensätze der internen Fahrzeugsensorik komplementiert werden.

Gemäß einer Weiterbildung der vorliegenden Erfindung umfasst das Verfahren gemäß dem ersten Aspekt der vorliegenden Erfindung ferner wenigstens einen der folgenden Schritte:

> d) Ausgeben einer akustischen und zusätzlich oder alternativ optischen und zusätzlich oder alternativ haptischen Warnung an einen Fahrer des Fahrzeugs, wenn das Änderungswarnsignal vorliegt.
> e) Aktivieren einer Bremse, insbesondere einer Parkbremse, des Fahrzeugs und zusätzlich oder alternativ zumindest teilweises Deaktivieren eines Geschwindigkeitsregelbedienelements des Fahrzeugs, wenn das Änderungswarnsignal vorliegt.
> f) Anzeigen zumindest des Objekts, welches das Änderungswarnsignal hervorgerufen hat, auf einem Bildschirm des Fahrzeugs, wenn das Änderungswarnsignal vorliegt.

Alle Schritte des Verfahrens können in beliebiger, sinnvoller Reihenfolge ausgeführt werden.

Gemäß einer weiteren Weiterbildung der vorliegenden Erfindung kann das Fahrerassistenzsystem ferner ein Warnungsmodul und zusätzlich oder alternativ ein Bremsmodul und zusätzlich oder alternativ ein Anzeigemodul umfassen. Das Warnungsmodul kann ausgebildet sein, eine akustische und zusätzlich oder alternativ optische und zusätzlich oder alternativ haptische Warnung an einen Fahrer des Fahrzeugs auszugeben (Schritt d)). Das Bremsmodul kann ausgebildet sein, eine Bremse, insbesondere eine Parkbremse, des Fahrzeugs zu aktivieren und zusätzlich oder alternativ zumindest teilweises eines Geschwindigkeitsregelbedienelements des Fahrzeugs zu deaktivieren (Schritt e)). Das Anzeigemodul kann ausgebildet sein, zumindest das Objekt, welches das Änderungswarnsignal hervorgerufen hat, auf einem Bildschirm des Fahrzeugs anzuzeigen (Schritt f)).

Das Warnungsmodul und zusätzlich oder alternativ das Bremsmodul und zusätzlich oder alternativ das Anzeigemodul kann kommunikativ mit dem Änderungswarnungsmodul verbunden sein.

Die akustische und zusätzlich oder alternativ optische und zusätzlich oder alternativ haptische Warnung kann durch ein Element des (Ego-)Fahrzeugs oder ein externes Gerät, wie beispielsweise ein Mobiltelefon, Smartphone, intelligenter Fahrzeugschlüssel und dergleichen, an den Fahrer ausgegeben werden.

Die akustische Warnung kann ein Signalton sein, der an den Fahrer bei Vorliegen des Änderungswarnsignals ausgegeben wird. Beispielsweise kann als akustische Warnung an den Fahrer eine Ausgabe eines Warntons, eine akustische Ansage (z. B. "Achtung veränderte Umgebung, bitte Umfeld überprüfen"), eine Änderung der Wiedergabelautstärke (leiser / lauter) von Audiomedien (Radio, Streaming usw.), ein Anruf an ein Smartphone des Fahrers oder eine Telematikeinheit des (Ego-)Fahrzeugs, welche(s) dann eine automatische Ansage abgibt und den Fahrer auf die Umgebungsänderung hinweist, erfolgen.

Die optische Warnung kann ein Lichtsignal eines Leuchtmittels (z. B. LED usw.) sein, das an den Fahrer bei Vorliegen des Änderungswarnsignals ausgegeben wird. Beispielsweise kann als optische Warnung an den Fahrer eine Aktivierung einer Warnleuchte des (Ego-)Fahrzeugs, eine Aktivierung einer Meldung auf einem Bildschirm des (Ego-)Fahrzeugs, ein Ausleuchten einer Fahrzeugecke im Innenraum des (Ego-)Fahrzeugs (z. B. Ambiente-Beleuchtung an der Stelle des Innenraums verstärken oder einfärben, an welcher außerhalb des (Ego-)Fahrzeugs eine Gefahr durch eine signifikante Umgebungsänderung besteht), eine Aktivierung von Innenraumleuchten des (Ego-)Fahrzeugs(z. B. Leseleuchte im Fond, Schminkleuchten hinter Sonnenblende) und durch Einschalten oder pulsierendes Leuchten, ein Ausleuchten der Fahrzeugumgebung (z. B. mit Front- oder Heckscheinwerfern oder Ambiente-Beleuchtung an den Türgriffen oder unter dem Kennzeichen oder mit Ambiente-Beleuchtung unter den Außenspiegeln des (Ego-Fahrzeugs) an der Stelle des außerhalb des (Ego-)Fahrzeugs an der eine Gefahr durch eine signifikante Umgebungsänderung besteht) und eine Einblendung einer Warnung in einem Head-up Display des (Ego-)Fahrzeugs (statisch oder dynamisch via virtueller Realität (VR)) erfolgen.

Die haptische Warnung kann insbesondere eine Kraft, beispielsweise in Form eines Drucks, einer Vibration, eines Pulsierens, usw., eines Elements des (Ego-)Fahrzeugs oder eines externen Geräts (Mobiltelefon / Smartphone / intelligenter Fahrzeugschlüssel) auf den Fahrer sein. Beispielsweise kann die haptische Warnung an den Fahrer als eine Vibration eines Geschwindigkeitsregelbedienelements (Fahrfußhebel, Fahrpedal, Gasdrehgriff, Handgas-Bedienelement usw.), eines Schalthebels, eines Lenkrads, eines Sicherheitsgurts, einer Armlehne, eines Sitzes usw. des (Ego-)Fahrzeugs, eine Straffung des Sicherheitsgurts des (Ego-)Fahrzeugs erfolgen.

Die akustische bzw. optische bzw. haptische Warnung ist dabei bevorzugt verschieden von einer (akustischen / optischen / haptischen) Warnung eines anderen Fahrerassistenzsystems, insbesondere einer Park-Distance-Control, des (Ego-)Fahrzeugs. Zudem kann die optische und zusätzlich oder alternativ die akustische und zusätzlich oder alternativ die haptische Warnung an den Fahrer zusätzlich oder alternativ zu Elementen des (Ego-)Fahrzeugs mittels eines oder mehrerer externer Geräte wie Smartphone, portablen Geräten / "wearables" (z. B. Smart watch, Schrittzähler, Intelligente Brille, Kopfhörer, E-Zigaretten) oder intelligenter Infrastruktur im Umkreis des (Ego-)Fahrzeugs (z. B. blinkendes Leuchten von verbundenen Lampen in der Garageneinfahrt, keine Öffnung eines Tores oder einer Schranke solange der Fahrer keine Bestätigung über die Kenntnisnahme der Gefahr abgegeben hat usw.) erfolgen. Somit wird verhindert, dass der Fahrer Umgebungsänderungen, die zu einem Zusammenstoß zwischen dem Fahrzeug und für die Umgebungsänderung verantwortlichen Objekten führen können, nicht bemerkt.

Zusätzlich oder alternativ wird die Bremse, insbesondere die Parkbremse des (Ego-)Fahrzeugs aktiviert, wenn das Änderungswarnsignal vorliegt, sodass das (Ego-)Fahrzeug nicht bewegt werden und somit kein Zusammenstoß mit einem Objekt durch eine Bewegung des (Ego-)Fahrzeugs stattfinden kann. Der Fahrer muss erst aktiv das Lösen der (Park-)Bremse bestätigen (z. B. Bestätigen eines entsprechenden Hinweises auf einem Touchscreen des Fahrzeugs oder eines Smartphones oder eines intelligenten Schlüssels) bzw. eigenständig die (Park-)Bremse lösen, bevor das Fahrzeug bewegt, insbesondere ausgeparkt, werden kann. Vor dem Bewegen des (Ego-)Fahrzeugs wird beispielsweise die Parkbremse reaktiviert, wenn eine signifikante Umgebungsänderung erkannt wird, die eine Gefahr (beim Ausparken) darstellt. Die Parkbremse muss dann manuell deaktiviert (übersteuert) werden, bevor der Fahrer das (Ego-)Fahrzeug in Bewegung setzen kann, was ihn auf die signifikante Umgebungsänderung hinweist und einen Zusammenstoß mit dem Objekt, welches für die signifikante Umgebungsänderung verantwortlich ist, verhindert. Somit wird sichergestellt, dass der Fahrer aufgrund einer Umgebungsänderung, die er selbst nicht bemerkt, das Fahrzeug nicht versehentlich bewegen kann und es zu einem Zusammenstoß mit dem entsprechenden für die Umgebungsänderung verantwortlichen Objekt und dem (Ego-)Fahrzeug kommt.

Zusätzlich oder alternativ wird das Geschwindigkeitsregelbedienelement, fachsprachlich auch Fahrfußhebel oder Fahrpedal bei Automobilen, und Gasdrehgriff oder Handgas-Bedienelement bei Krafträdern, Leichtkraftfahrzeugen und individuell für Menschen mit Körperbehinderungen umgerüsteten Automobilen, zumindest teilweise deaktiviert. Dabei kann beispielsweise ein erster oder der komplette Bedienbereich des Geschwindigkeitsregelbedienelements deaktiviert werden, sodass in diesem kein Regelsignal an den Motor oder das Steuergerät des Fahrzeugs abgegeben wird. Das Fahrzeug bewegt sich somit nicht, auch wenn durch den Fahrer das Geschwindigkeitsregelbedienelement bedient bzw. verstellt wird. Der Fahrer muss erst aktiv das Geschwindigkeitsregelbedienelement reaktivieren (z. B. Bestätigen eines entsprechenden Hinweises auf einem Touchscreen des Fahrzeugs oder eines Smartphones oder eines intelligenten Schlüssels), bevor das Fahrzeug bewegt, insbesondere ausgeparkt, werden kann. Es kann auch eine Gegenkraft zu der Bedienrichtung des Geschwindigkeitsregelbedienelements aufgebracht werden, die der Fahrer erst überwinden muss, um das Fahrzeug zu bewegen, wobei er durch den erhöhten Kraftaufwand zum Bedienen des Geschwindigkeitsregelbedienelements auf die Umgebungsänderung aufmerksam gemacht wird. So kann beispielsweise das Geschwindigkeitsregelelement (Gaspedal) (teilweise) deaktiviert werden, wenn eine signifikante Umgebungsänderung erkannt wurde, sodass dieses erst dann den Befehl zur Beschleunigung weiterleitet, wenn der Fahrer eine Meldung auf einem Bildschirm bestätigt hat oder manuell das Gaspedal doppelt angetippt hat und damit signalisiert, die Warnung vor der signifikanten Umgebungsänderung verstanden zu haben. Somit wird verhindert, dass der Fahrer eine Umgebungsänderung nicht bemerkt und das Fahrzeug mit dem für die Umgebungsänderung verantwortlichen Objekt zusammenstößt.

Zusätzlich oder alternativ wird das Objekt, welches das Änderungswarnsignal hervorgerufen hat, beispielsweise als Symbol oder als Livebild auf dem Bildschirm des Fahrzeugs, bevorzugt in der Vogelperspektive angezeigt, wenn das Änderungswarnsignal vorliegt. Dadurch kann der Fahrer sofort erkennen, wo die Umgebungsänderung vorliegt und ob das Fahrzeug gefahrlos bewegt werden kann oder nicht. Dadurch wird sichergestellt, dass der Fahrer keine Objekte, die zu einer Umgebungsänderung geführt haben, die er selbst nicht wahrgenommen hat, übersieht und einen Zusammenstoß verursacht.

Der Schritt d), zusätzlich oder alternativ der Schritt e) und zusätzlich oder alternativ der Schritt f) werden, noch bevor das Fahrzeug aus dem Stillstand in Bewegung gesetzt wird, durchgeführt. Einer oder mehrere der Schritte d), e) und f) können beispielsweise noch während des Fahrzeugstillstands und zusätzlich oder alternativ beim bzw. kurz nach dem Aufschließen des (Ego-)Fahrzeugs und zusätzlich oder alternativ beim bzw. kurz nach dem Einschalten der Zündung des (Ego-)Fahrzeugs ausgeführt werden, sodass der Fahrer, noch bevor er das Fahrzeug in Bewegung setzt, über signifikante Umgebungsänderungen informiert wird.

Durch die Warnungen und das Anzeigen des Objekts, das für die Umgebungsänderung verantwortlich ist, wird der Fahrer effektiv auf die Umgebungsänderung aufmerksam gemacht. Zudem wird der Fahrer durch das Bestätigen des Lösens der (Park-)Bremse bzw. des Freigebens des Geschwindigkeitsregelbedienelements oder durch das aktive Lösen der (Park-)Bremse bzw. das Übersteuern der auf das Geschwindigkeitsregelbedienelement aufgebrachten Gegenkraft auf die außergewöhnliche neue Gefahr durch die Umgebungsänderung hingewiesen und Unfälle insbesondere beim Ausparken effektiv vermieden.

Gemäß einer Weiterbildung der vorliegenden Erfindung umfassen die Umgebungsdaten zumindest den jeweils im Wesentlichen senkrechten, horizontalen Abstand einer Karosserie des Fahrzeugs zu Objekten in einem Umfeld von im Wesentlichen 360° um das Fahrzeug.

Die Umgebungsdaten enthalten Informationen zu dem jeweils im Wesentlichen senkrechten Abstand der äußeren Oberfläche Karosserie des (Ego-)Fahrzeugs zu Objekten in der Umgebung des (Ego-)Fahrzeugs. Die senkrechten Abstände können in der horizontalen Ebene und zusätzlich oder alternativ in der vertikalen Richtung in den Umgebungsdatensätzen vorliegen. Beispielsweise kann in den Umgebungsdatensätzen der Abstand der vorderen Karosserieoberfläche zu dem in frontaler Richtung nächsten Objekt, der hinteren Karosserieoberfläche zu dem in rückwärtiger Richtung nächsten Objekt, der linken Karosserieoberfläche zu dem in linker Richtung nächsten Objekt, der rechten Karosserieoberfläche zu dem in rechter Richtung nächsten Objekt und der unteren Karosserieoberfläche zu dem in Richtung nach unten nächsten Objekt enthalten sein. Es kann auch entlang des horizontalen Umfangs der Karosserie des (Ego-)Fahrzeugs (z. B. in definierten Abständen entlang des horizontalen Umfangs) und entlang der unteren Oberfläche der Karosserie des (Ego-) Fahrzeugs (z. B. in definierten Abständen entlang der unteren Oberfläche) der jeweilige senkrechte Abstand zu dem jeweils nächstliegenden Objekt in den Umgebungsdatensätzen enthalten sein. Insbesondere wird für jedes Objekt der im Wesentlichen senkrechte, horizontale oder vertikale Abstand und optional zusätzlich die Richtung zu der äußeren Oberfläche der Karosserie des (Ego-)Fahrzeugs von den Umgebungsdatensätzen umfasst.

Mittels der Umgebungsdatensätze umfassend die senkrechten Abstände der Karosserie zu den Objekten in der Umgebung des (Ego-)Fahrzeugs kann eine signifikante Umgebungsänderung besonders sicher und genau ermittelt und der Fahrer sodann entsprechend gewarnt werden.

Gemäß einer Weiterbildung der vorliegenden Erfindung umfassen die Umgebungsdaten eine vordefinierte Anzahl an nächstgelegenen Objekten mit deren jeweiliger Position relativ zu dem Fahrzeug.

Bevorzugt werden die zwei bis 20, ferner bevorzugt die vier bis 16, besonders bevorzugt die acht dem (Ego-Fahrzeug) bzw. dessen Karosserie am nächsten gelegenen Objekte mit ihren jeweiligen Positionen von den Umgebungsdaten erfasst. Insbesondere wird für jedes Objekt der im Wesentlichen senkrechte, horizontale oder vertikale Abstand und optional zusätzlich die Richtung zu der Karosserie des (Ego-)Fahrzeugs von den Umgebungsdatensätzen umfasst.

In einer vorteilhaften Ausführungsform ist es möglich, ein Konfidenzintervall zu erzeugen und zu hinterlegen, welches den Reifegrad der Information angibt.

Beispielsweise können die Umgebungsdaten jeweils die ein, zwei, drei, vier oder fünf nächstgelegenen Objekte in einer, mehreren oder jeder (Haupt-)Richtung, also vorne hinten, links, rechts und unten, mit ihren jeweiligen Positionen relativ zu dem (Ego-)Fahrzeug oder zumindest ihren jeweils senkrechten Abständen zu der Oberfläche der Karosserie in der entsprechenden Richtung umfassen. Die jeweilige Position der Objekte relativ zu dem (Ego-)Fahrzeug bzw. dessen Karosserie kann beispielsweise über Radialkoordinaten (Winkel / Richtung und Radius/Abstand) oder kartesische Koordinaten (x-Richtung - vorne/hinten; y-Richtung - links/-rechts; z-Richtung unten/(oben)) in den Umgebungsdaten angegeben sein.

Hierbei kann in vorteilhafter Ausführungsform jeweils ein Ringspeicher genutzt werden welcher die Daten aufzeichnet und falls nicht relevant wieder verwirft. Zu jedem Zeitschritt, in dem ein Umgebungsdatensatz empfangen wird, wird der Ringspeicher (vgl. FIFO-Speicher), der mindestens so viele Speicherplätze aufweist wie die vordefinierte Anzahl an nächstgelegenen Objekten, mit einem neuen Umgebungsdatensatz umfassend die vordefinierte Anzahl an nächstgelegenen Objekten komplett überschrieben.

Auf diese Weise werden die relevanten Informationen über die Umgebung des (Ego-)Fahrzeugs besonders schnell und effizient zur weiteren Verarbeitung bereitgestellt.

Gemäß einer Weiterbildung der vorliegenden Erfindung wird (in dem Schritt b)) für jedes Objekt in dem gespeicherten Umgebungsdatensatz eine Abstandsänderung $\Delta di$ durch Vergleichen dessen jeweiliger Position in dem gespeicherten Umgebungsdatensatz mit dessen entsprechender Position in dem momentan empfangenen Umgebungsdatensatz als die momentane Umgebungsänderung berechnet. Ferner wird (in dem Schritt c)) das Änderungswarnsignal bereitgestellt, wenn eine der berechneten Abstandsänderungen $\Delta di$ den vordefinierten Umgebungsänderungsgrenzwert $\Delta_{lim}$ überschreitet, $\Delta di > \Delta_{lim}$.

Beispielsweise werden, wenn in jeder Richtung (vorne, hinten, links, rechts, unten) zwei Objekte ($|i| = 10$) mit ihren Positionen relativ zu dem (Ego-)Fahrzeug gespeichert sind, zu jedem empfangenen Umgebungsdatensatz zehn Abstandsänderungen $\Delta di$ berechnet. Für jedes der zehn umfassten Objekte wird die jeweilige Abstandsänderung $\Delta di$ durch Vergleich mit der entsprechenden Position in dem gespeicherten Umgebungsdatensatz, insbesondere durch Subtraktion der jeweiligen momentanen relativen Position zu dem (Ego-) Fahrzeug bzw. des jeweiligen momentanen senkrechten Abstands zu der Karosserie von der entsprechenden relativen Position bzw. dem entsprechenden senkrechten Abstand aus dem gespeicherten Umgebungsdatensatz berechnet.

Auf diese Weise kann die momentane Umgebungsänderung besonders schnell und effizient berechnet und somit ggf. das Änderungswarnsignal besonders schnell und effizient bereitgestellt werden.

Gemäß einer Weiterbildung der vorliegenden Erfindung wird jeweils ein Konfidenzintervall den erzeugten oder empfangenen Umgebungsdatensätzen hinzugefügt, das eine Güte der jeweiligen Umgebungsdatensätze und zusätzlich oder alternativ der darin enthaltenen Objekte mittels eines Vertrauenswerts bewertet.

Das Konfidenzintervall kann beispielsweise basierend darauf abgeleitet werden, wie vertrauenswürdig die Informationsquelle ist. Ein hoher Vertrauenswert wird für Umgebungsdatensätze aus vertrauenswürdigen Quellen vergeben; ein niedriger Vertrauenswert wird für Umgebungsdatensätze aus nicht vertrauenswürdigen Quellen vergeben (z. B. hoher Vertrauenswert für Umgebungsdatensätze der eigenen Sensorik, niedriger Vertrauenswert für extern bereitgestellte Umgebungsdatensätze wie beispielsweise anderer Verkehrsteilnehmer oder der Infrastruktur).

Weiterhin kann die Höhe des Vertrauenswerts von Objekten von der Anzahl der das Objekt erfassenden Sensoren bzw. den das Objekt umfassenden Umgebungsdatensätzen abhängen (z. B. Erkennung eines Objekts sowohl durch Ultraschallsensorik als auch durch Kamera und externe Daten führt zu einem höheren Vertrauenswert und damit einer höheren Vertrauenswürdigkeit als die Erkennung durch einen einzelnen Sensor).

Zudem kann basierend auf dem Konfidenzintervall bzw. dem jeweiligen Vertrauenswert jeweils eine entsprechende Art der Warnung vordefiniert sein.

Gemäß einer Weiterbildung der vorliegenden Erfindung wird (in dem Schritt c)) das Änderungswarnsignal zusätzlich bereitgestellt, wenn in dem momentan empfangenen Umgebungsdatensatz wenigstens ein anderes Objekt umfasst ist als in dem gespeicherten Umgebungsdatensatz.

Sind beispielsweise immer die zehn nächsten Objekte, also in jeder der fünf Richtungen, vorne, hinten, links, rechts, unten, jeweils zwei Objekte, mit ihren jeweiligen relativen Positionen zu dem (Ego-)Fahrzeug bzw. mit ihren jeweiligen senkrechten Abständen von der Karosserie des (Ego-)Fahrzeugs in den Umgebungsdatensätzen vorhanden, so wird, wenn eines der zehn Objekte in dem zum Zeitpunkt des Stillstands des (Ego-)Fahrzeugs gespeicherten Umgebungsdatensatz (Referenz) in dem momentan empfangenen Umgebungsdatensatz durch ein anderes, näher gelegenes Objekt ersetzt ist, das Änderungswarnsignal ausgegeben.

Dadurch kann noch schneller und effizienter das Änderungswarnsignal bereitgestellt werden.

Gemäß einer Weiterbildung der vorliegenden Erfindung umfasst Verfahren gemäß dem ersten Aspekt der vorliegenden Erfindung ferner den folgenden Schritt: g) Kontinuierliches Ermitteln von Umgebungsdatensätzen mittels wenigstens eines ersten internen Sensors des Fahrzeugs während das Fahrzeug stillsteht oder alternativ während die Zündung des Fahrzeugs abgeschaltet ist und zusätzlich oder alternativ während das Fahrzeug verschlossen ist.

Alle Schritte des Verfahrens können in beliebiger, sinnvoller Reihenfolge ausgeführt werden.

Gemäß einer weiteren Weiterbildung der vorliegenden Erfindung kann das Fahrzeug gemäß dem dritten Aspekt der vorliegenden Erfindung wenigstens einen internen Sensor umfassen, der kommunikativ mit dem Fahrerassistenzsystem, insbesondere mit dem Schnittstellenmodul kommunikativ verbunden und eingerichtet ist, kontinuierlich Umgebungsdatensätzen mittels wenigstens eines ersten internen Sensors des Fahrzeugs zu ermitteln während das Fahrzeug stillsteht oder alternativ während das Fahrzeug abgeschaltet ist und zusätzlich oder alternativ während das Fahrzeug verschlossen ist.

Der wenigstens eine Sensor des (Ego-)Fahrzeugs kann ein Ultraschallsensor, der den Abstand zu einem Objekt basierend auf Laufzeitanalysen von ausgesendeten Ultraschallimpulsen ermittelt, eine Kamera, die den Abstand zu einem Objekt durch Bildanalyse (z. B. Triangulation) ermittelt, ein LIDAR-Sensor, der den Abstand zu einem Objekt basierend auf Laufzeitanalysen von Ausgesendeten Laserimpulsen ermittelt, ein haptischer Sensor welcher mit physischer Abtastung arbeitet und dergleichen sein. Es kann auch ein Sensor zur Bestimmung und Lokalisation von Funkkommunikation zum Einsatz kommen. Mit diesem Sensor können Quellen von Funkwellen, wie beispielsweise Mobilfunkgeräte / Smartphones und dergleichen, detektiert und lokalisiert werden. Dadurch lassen sich beispielsweise Positionen bzw. Abstände von Personen, die ein Mobilfunkgerät / Smartphone bei sich tragen, oder von Fahrzeugen mit Mobilkommunikationsvorrichtung relativ zu dem (Ego-)Fahrzeug bestimmen und in die Umgebungsdatensätze integrieren.

Der wenigstens eine Sensor ermittelt kontinuierlich Umgebungsdatensätze umfassend relative Positionen bzw. senkrechte Abstände von Objekten zu dem (Ego-)Fahrzeug bzw. zu dessen Karosserie. Die kontinuierlich ermittelten Umgebungsdatensätze können an das Fahrerassistenzsystem zur Bestimmung der momentanen Umgebungsänderung weitergeleitet werden.

Mittels des wenigstens einen internen Sensors des (Ego-)Fahrzeugs lassen sich Umgebungsdatensätze mit besonders präzisen Informationen über die Umgebung des (Ego-)Fahrzeugs ermitteln.

Gemäß einer Weiterbildung der vorliegenden Erfindung werden, wenn die berechnete momentane Umgebungsänderung $\Delta^t$ den vordefinierten Änderungsgrenzwert $\Delta_{lim}$ überschreitet, (in dem Schritt g)) die Umgebungsdatensätze zusätzlich mittels wenigstens eines zweiten internen Sensors des Fahrzeugs und zusätzlich oder alternativ mit einer höheren Abtastrate bzw. Taktrate ermittelt.

Sofern die Umgebungsdatensätze mit einer höheren Abtastrate / Taktrate ermittelt werden (Schritt g)), können die Umgebungsdatensätze analog mit einer höheren bzw. derselben Abtastrate/Taktrate, mit der sie ermittelt werden, empfangen werden (Schritt a)) und mit einer höheren bzw. derselben Abtastrate/Taktrate, mit der sie ermittelt werden, die momentane Umgebungsänderung $\Delta^t$ berechnet werden.

Beispielsweise können die Umgebungsdatensätze standardmäßig kontinuierlich mit einer Abtastrate/Taktrate von beispielsweise 0,2Hz [Hertz] durch je einen Ultraschallsensor in jeder Richtung (vorne, hinten, links, rechts, unten) ermittelt werden. Wenn eine signifikante Umgebungsänderung (momentane Umgebungsänderung $\Delta^t$ > vordefinierter Änderungsgrenzwert $\Delta_{lim}$) auftritt, wird mit einer höheren Taktrate von beispielsweise 5Hz und zusätzlich oder alternativ mit weiteren Sensoren (z. B. weitere Ultraschallsensoren oder zusätzlich andere Sensoren wie Kameras oder LIDAR-Sensoren) in der entsprechenden Richtung oder in allen Richtungen die Umgebungsdatensätze ermittelt.

Auf diese Weise kann einerseits Energie gespart werden, wenn keine signifikante Umgebungsänderung auftritt, und andererseits besonders genaue Umgebungsdatensätze ermittelt werden, wenn eine signifikante Umgebungsänderung auftritt. Somit kann eine energiesparende und dennoch präzise Warnung vor signifikanten Umgebungsänderungen erfolgen.

Gemäß einer Weiterbildung der vorliegenden Erfindung umfasst das Verfahren gemäß dem ersten Aspekt der vorliegenden Erfindung, ferner den folgenden Schritt:

h) Empfangen und Speichern eines Umgebungsdatensatzes als den gespeicherten Umgebungsdatensatz zu dem Zeitpunkt, t=0, zu dem das Fahrzeug stillsteht.

Gemäß einer weiteren Weiterentwicklung der vorliegenden Erfindung kann das Schnittstellenmodul oder das Vergleichsmodul ausgebildet sein, einen Umgebungsdatensatz als den gespeicherten Umgebungsdatensatz zu dem Zeitpunkt, t=0, zu dem das Fahrzeug stillsteht, zu empfangen und zu speichern.

Zu dem Zeitpunkt t=0, zu dem das Fahrzeug stillsteht wird der momentan empfangene Umgebungsdatensatz dauerhaft, beispielsweise in dem ersten Speicher, gespeichert und fortan als Referenz für das Ermitteln der Umgebungsänderung verwendet. Der zum besagten Zeitpunkt t=0 gespeicherte Umgebungsdatensatz gibt den Umgebungszustand um das (Ego-)Fahrzeug zu dem Zeitpunkt wieder, ab welchem sich das (Ego-)Fahrzeug nicht mehr bewegt.

Die vorliegende Erfindung sowie das technische Umfeld werden nachfolgend anhand der Figuren näher erläutert. Es wird darauf hingewiesen, dass die vorliegende Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung oder aus den Figuren zu kombinieren. Insbesondere wird darauf hingewiesen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können.

Es zeigen:

Fig. 1     ein schematisches Ablaufdiagramm einer beispielhaften Ausführungsform des Verfahrens zum Erkennen von Änderungen einer Umgebung eines Fahrzeugs;

Fig. 2     eine schematische Darstellung einer beispielhaften ausführungsform des Fahrerassistenzsystems zum Erkennen von Änderungen einer Umgebung eines Fahrzeugs;

Fig. 3     eine schematische Darstellung einer beispielhaften Ausführungsform des Fahrzeugs umfassend das Fahrerassistenzsystem aus Fig. 2;

Fig. 4     eine schematische Darstellung einer Umgebung des Fahrzeugs zu verschiedenen Zeitpunkten; und

Fig. 5     eine weitere schematische Darstellung einer Umgebung des Fahrzeugs zu verschiedenen Zeitpunkten.

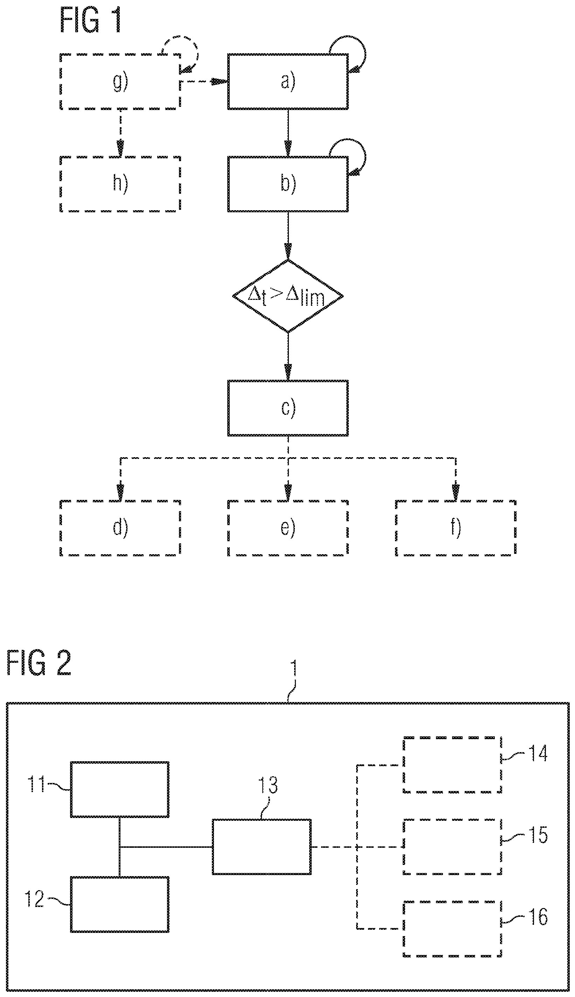

In Fig. 1 ist eine beispielhafte Ausführungsform des Verfahrens zum Erkennen von Änderungen einer Umgebung eines Fahrzeugs gemäß dem ersten Aspekt der vorliegenden Erfindung schematisch dargestellt. Das Verfahren umfasst die Schritte a) kontinuierliches Empfangen, b) kontinuierliches Berechnen und c) Bereitstellen, sowie jeweils optional die Schritte d) Ausgeben, e) Aktivieren, f) Anzeigen, g) kontinuierliches Ermitteln und h) Empfangen und Speichern. Die Schritte des Verfahrens können in beliebiger, sinnvoller Reihenfolgen ausgeführt werden. Die kontinuierlichen Schritte können mit jeweils unterschiedlichen Abtastraten bzw. Taktraten oder mit einer gemeinsamen Abtastrate / Taktrate ausgeführt werden.

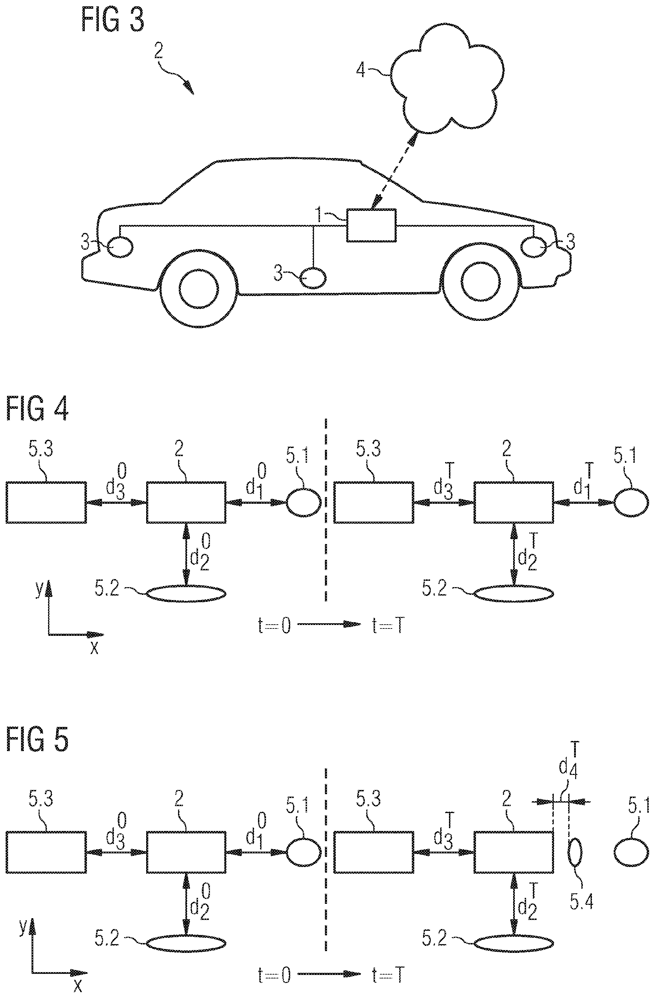

In dem optionalen Schritt g) werden kontinuierlich Umgebungsdatensätze (zu jedem Zeitpunkt der Taktrate / Abtastrate ein Umgebungsdatensatz) mittels wenigstens eines ersten internen Sensors (3, siehe Fig. 3) des Fahrzeugs (2, siehe Fig. 3) ermittelt, während das Fahrzeug stillsteht oder während eine Zündung des das Fahrzeugs abgeschaltet und zusätzlich oder alternativ (von außen) verschlossen ist. Die kontinuierlich ermittelten Umgebungsdatensätze werden von dem wenigstens einen ersten Sensor an das Fahrerassistenzsystem (1, siehe Figs. 2 und 3) bzw. dessen Schnittstellenmodul (11, siehe Fig. 2) weitergeleitet und in einem zweiten (Ring-) Speicher zwischengespeichert.

In dem optionalen Schritt h) wird der Umgebungsdatensatz, der zu dem Zeitpunkt t=0 ermittelt wurde, zu dem das Fahrzeug sich nicht mehr bewegt und völlig stillsteht bzw. zu dem die Zündung des Fahrzeugs ausgeschaltet wird bzw. zu dem das Fahrzeug verschlossen wird als Referenz gespeichert. Besagter Umgebungsdatensatz wird als der gespeicherte Umgebungsdatensatz von dem Fahrerassistenzsystem bzw. dessen Schnittstellenmodul oder Vergleichsmodul (12, siehe Fig. 2) in einem ersten Speicher gespeichert.

In dem Schritt a) werden kontinuierlich Umgebungsdatensätze (zu jedem Zeitpunkt der Taktrate / Abtastrate wenigstens ein Umgebungsdatensatz) empfangen. Dabei können die Umgebungsdatensätze von dem wenigstens einen internen Sensor des Fahrzeugs und zusätzlich oder alternativ von einer externen Entität (4, siehe Fig. 3), wie beispielsweise intelligenter Infrastruktur (z. B. Verkehrskamera usw.), einer Verkehrsdrohne, einem anderen Fahrzeug und dergleichen, empfangen werden. Die Umgebungsdatensätze enthalten dabei jeweils Informationen über die Umgebung des Fahrzeugs, insbesondere die jeweilige Position von Objekten (5, siehe Figs. 4 und 5) relativ zu dem Fahrzeug.

In dem Schritt b) wird kontinuierlich (zu jedem Zeitpunkt der Abtastrate / Taktrate) eine momentane Umgebungsänderung $\Delta^t$ berechnet. Dies erfolgt durch kontinuierliches Vergleichen des momentan im Stillstand bzw. abgeschalteten /verschlossenen Zustand des Fahrzeugs empfangenen Umgebungsdatensatzes mit dem gespeicherten Umgebungsdatensatz, welcher im Moment des Stillstehens des Fahrzeugs (2) empfangen und gespeichert wurde. Das Fahrerassistenzsystem bzw. dessen Vergleichsmodul vergleicht den im ersten Speicher gespeicherten Umgebungsdatensatz (Referenz) mit dem momentan im zweiten (Ring-)Speicher gespeicherten Umgebungsdatensatz, um die momentane Umgebungsänderung $\Delta^t$ zu berechnen. Dazu wird der momentane Umgebungsdatensatz aus dem zweiten (Ring-)Speicher von dem gespeicherten Umgebungsdatensatz aus dem ersten Speicher subtrahiert, sodass für jedes Objekt in der Umgebung des Fahrzeugs eine Positionsänderung bzw. Abstandsänderung zu dem Fahrzeug berechnet wird.

Wenn die berechnete momentane Umgebungsänderung $\Delta^t$ (jeweilige Abstands-/Positionsänderung der Objekte in der Umgebung des Fahrzeugs) größer als ein vordefinierter Änderungsgrenzwert $\Delta_{lim}$ (maximal zulässige Abstandsänderung) ist, also wenn die momentane Umgebungsänderung $\Delta^t$ signifikant ist, wird in dem Schritt c) ein Änderungswarnsignal bereitgestellt. Das Änderungswarnsignal kann eine Warnung an den Fahrer des Fahrzeugs auslösen. Das Fahrerassistenzsystem bzw. dessen Änderungswarnmodul (13, siehe Fig. 2) stellt beispielsweise einem Warnungsmodul (14, siehe Fig. 2), einem Bremsmodul (15, siehe Fig. 2) oder einem Anzeigemodul (16, siehe Fig. 2) des Fahrerassistenzsystems oder einem externen Gerät (Mobiltelefon, Smartphone, intelligenter Schlüssel usw.) das Änderungswarnsignal bereit, wenn die momentane Umgebungsänderung $\Delta^t$ signifikant ist und somit die Gefahr besteht, dass das Fahrzeug mit einem von dem Fahrer nicht bemerkten Objekt zusammenstößt.

Wenn das Änderungswarnsignal vorliegt, wird in dem optionalen Schritt d) eine akustische und zusätzlich oder alternativ eine optische und zusätzlich oder alternativ eine haptische Warnung an den Fahrer des Fahrzeugs ausgegeben. Der Fahrer wird dabei mittels des Fahrerassistenz Systems bzw. dessen Warnungsmoduls (15, siehe Fig. 2) und zusätzlich oder alternativ mittels eines externen Geräts (Mobiltelefon, Smartphone, intelligenter Schlüssel usw.) akustisch / optisch / haptisch vor der signifikanten Umgebungsänderung gewarnt und somit ein Zusammenstoß mit einem von dem Fahrer nicht erkannten Objekt der veränderten Umgebung vermieden.

Wenn das Änderungswarnsignal vorliegt, wird in dem optionalen Schritt e) eine Bremse, insbesondere eine Parkbremse des Fahrzeugs aktiviert. Zusätzlich oder alternativ wird ein Geschwindigkeitsregelbedienelement (Fahrfußhebel, Fahrpedal, Gasdrehgriff, Handgas-Bedienelement usw.) des Fahrzeugs zumindest teilweise deaktiviert. Das Fahrerassistenzsystem bzw. dessen Bremsmodul aktiviert die (Park-)Bremse des Fahrzeugs, wenn eine signifikante Umgebungsänderung erkannt wurde und daher das Änderungswarnsignal vorliegt. Zusätzlich oder alternativ deaktiviert Fahrerassistenzsystem bzw. dessen Bremsmodul das Geschwindigkeitsregelbedienelement des Fahrzeugs zumindest teilweise, wenn eine signifikante Umgebungsänderung erkannt wurde und daher das Änderungswarnsignal vorliegt. Der Fahrer muss somit zunächst die (Park-)bremse aktiv lösen bzw. das Geschwindigkeitsregelbedienelement reaktivieren (z. B. durch Bestätigen einer Meldung auf einem Bildschirm des Fahrzeugs oder durch zweimaliges Antippen des Geschwindigkeitsregelbedienelements) bevor er das Fahrzeug aus dem Stillstand in Bewegung setzen kann. Dadurch wird der Fahrer zum einen auf die signifikante Umgebungsänderung und die daraus resultierende Kollisionsgefahr aufmerksam gemacht und zum anderen ein Zusammenstoß des Fahrzeugs mit dem für die signifikante Umgebungsänderung verantwortlichen Gegenstand vermieden.

Wenn das Änderungswarnsignal vorliegt, wird in dem optionalen Schritt f) zumindest das Objekt, welches das Änderungswarnsignal hervorgerufen hat, auf einem Bildschirm des Fahrzeugs angezeigt (z. B. in der Vogelperspektive als Symbol oder als Echtzeitkamerabild/Livebild).

In Fig. 2 ist eine beispielhafte Ausführungsform des Fahrerassistenzsystems 1 zum Erkennen von Änderungen einer Umgebung eines Fahrzeugs gemäß dem zweiten Aspekt der vorliegenden Erfindung schematisch dargestellt. Das Fahrerassistenzsystem 1 umfasst Mittel (Module) zum Ausführen der Schritte des Verfahrens aus Fig. 1. Insbesondere umfasst das Fahrerassistenzsystem 1 ein Schnittstellenmodul 11, ein Vergleichsmodul 12 und ein Änderungswarnmodul 13, sowie jeweils optional ein Warnungsmodul 14, ein Bremsmodul 15 und ein Anzeigemodul 16. Die Module des Fahrerassistenzsystems 1 können Softwaremodule, die in dem als Datenverarbeitungseinrichtung ausgebildeten Fahrerassistenzsystem 1 implementiert sind und dieses veranlassen die entsprechenden Schritte auszuführen, oder separate Hardwaremodule, die jeweils eigenständig den entsprechenden Schritt ausführen, sein.

Das Schnittstellenmodul 11 ist ausgebildet den Schritt a) sowie optional den Schritt h) auszuführen. Dabei ist das Schnittstellenmodul 11 mit dem wenigstens einen ersten Sensor des Fahrzeugs und zusätzlich oder alternativ mit der wenigstens einen externen Entität kommunikativ verbunden und kann die empfangenen momentanen Umgebungsdatensätze in dem zweiten (Ring-)Speicher und den zum Zeitpunkt des Stillstands / Abschaltens / Abschließens des Fahrzeugs empfangenen Umgebungsdatensatz in dem ersten Speicher als gespeicherten Umgebungsdatensatz abspeichern.

Das Vergleichsmodul 12 ist kommunikativ mit dem Schnittstellenmodul 11 verbunden und erhält jeweils den empfangenen momentanen Umgebungsdatensatz beispielsweise aus dem zweiten (Ring-)Speicher. Das Vergleichsmodul 12 ist ausgebildet, den Schritt b) auszuführen. Das Vergleichsmodul 12 kann mit dem wenigstens einen ersten Sensor des Fahrzeugs und zusätzlich oder alternativ mit der wenigstens einen externen Entität kommunikativ verbunden sein und anstelle des Schnittstellenmoduls ausgebildet sein, optional den Schritt h) auszuführen, wobei es den zum Zeitpunkt des Stillstands / Abschaltens / Abschließens des Fahrzeugs empfangenen Umgebungsdatensatz in dem ersten Speicher als gespeicherten Umgebungsdatensatz abspeichert.

Das Änderungswarnmodul 13 ist mit dem Vergleichsmodul 12 kommunikativ verbunden und ausgebildet, den Schritt c) auszuführen.

Das optionale Warnungsmodul 14 ist mit dem Änderungswarnmodul 13 kommunikativ verbunden und ausgebildet, den Schritt d) auszuführen.

Das optionale Bremsmodul 15 ist mit dem Änderungswarnmodul 13 kommunikativ verbunden und ausgebildet, den Schritt e) auszuführen.

Das optionale Anzeigemodul 16 ist mit dem Änderungswarnmodul 13 kommunikativ verbunden und ausgebildet, den Schritt f) auszuführen.

In Fig. 3 ist eine beispielhafte Ausführungsform des Fahrzeugs 2 gemäß dem dritten Aspekt der vorliegenden Erfindung umfassend das Fahrerassistenzsystem 1 aus Fig. 2 schematisch dargestellt. Das Fahrzeug 2 umfasst das Fahrerassistenzsystem 1 und wenigstens einen (hier beispielhaft drei) ersten Sensor 3. Der wenigstens eine Sensor 3 ist mit dem Fahrerassistenzsystem 1 kommunikativ verbunden und ausgebildet, den Schritt g) des Verfahrens aus Fig. 1 auszuführen. Das Fahrerassistenzsystem 1 kann zusätzlich oder alternativ zu dem wenigstens einen Sensor 3 mit wenigstens einer externen Entität 4, wie intelligenter Infrastruktur (z. B. Verkehrskamera usw.), einer Verkehrsdrohne, einem anderen Fahrzeug und dergleichen, kommunikativ verbunden sein und von dieser kontinuierlich Umgebungsdatensätze empfangen.

In Fig. 4 ist die Umgebung des Fahrzeugs 2 zu zwei Unterschiedlichen Zeitpunkten schematisch dargestellt. Das Fahrzeug 2 und dessen Umgebung sind in der Vogelperspektive dargestellt. Diese Darstellung kann auch auf einem Bildschirm des Fahrzeugs 2 dem Fahrer in Echtzeit angezeigt werden. Links ist die Umgebung des Fahrzeugs 2 zu dem Zeitpunkt t=0 dargestellt, zu dem das Fahrzeug 2 sich nicht mehr bewegt und stillsteht oder zu dem die Zündung des Fahrzeugs 2 abgeschaltet wird oder zu dem das Fahrzeug 2 verschlossen wird. Rechts ist die Umgebung des Fahrzeugs 2 zu dem späteren Zeitpunkt t=T dargestellt, zu dem das Fahrzeug 2 noch stillsteht oder zu dem die Zündung des Fahrzeugs 2 angeschaltet wird oder zu dem das Fahrzeug 2 aufgeschlossen wird.

Zum Zeitpunkt t=0 befinden sich drei Objekte 5 in der Umgebung des Fahrzeugs 2. Das erste Objekt 5.1 befindet sich in x-Richtung vor dem Fahrzeug 2 in einem Abstand $d_1^0$. Das zweite Objekt 5.2 befindet sich in (negativer) y-Richtung rechts neben dem Fahrzeug 2 in einem Abstand $d_2^0$. Das dritte Objekt 5.3 befindet sich in (negativer) x-Richtung hinter dem Fahrzeug 2 in einem Abstand $d_3^0$. Der gespeicherte Umgebungsdatensatz kann daher beispielsweise die drei Objekte 5 mit ihren jeweiligen horizontalen, senkrechten Abständen zu dem Fahrzeug 2 (bzw. (der Oberfläche) dessen Karosserie) und Richtungen umfassen:

| Objekt | Richtung | Abstand |
|--------|----------|---------|
| 1 | +x | $d_1^0$ |
| 2 | -y | $d_2^0$ |
| 3 | -x | $d_3^0$ |

Zum Zeitpunkt t=T befinden sich die drei selben Objekte 5 in der Umgebung des Fahrzeugs 2. Der Abstand $d_2^T$ des zweiten Objekts 5.2 und der Abstand $d_3^T$ des dritten Objekts 5.3 haben sich nicht geändert, $d_2^T=d_2^0$; $d_3^T=d_3^0$. Somit ergibt sich für das zweite und das dritte Objekt 5.2, 5.3 keine Umgebungsänderung $\Delta^T$ zum Zeitpunkt t=T. Das erste Objekt 5.1 hat sich jedoch in (negativer) x-Richtung auf das Fahrzeug 2 zubewegt und befindet sich nun in einem Abstand $d_1^T$ der geringer ist als der Abstand $d_1^0$, $d_1^T<d_1^0$. Der momentane Umgebungsdatensatz kann daher beispielsweise die drei Objekte 5 mit ihren jeweiligen horizontalen, senkrechten Abständen zu dem Fahrzeug 2 (bzw. (der Oberfläche) dessen Karosserie) und Richtungen umfassen:

| Objekt | Richtung | Abstand |
|--------|----------|---------|
| 1 | +x | $d_1^T$ |
| 2 | -y | $d_2^T$ |
| 3 | -x | $d_3^T$ |

Somit ergibt sich eine Umgebungsänderung $\Delta^T$ zum Zeitpunkt t=T die der Differenz zwischen dem Abstand des ersten Objekts 5.1 zum Zeitpunkt t=0 und dem Abstand des ersten Objekts 5.1 zum Zeitpunkt t=T entspricht, $\Delta^T = d_1^0 - d_1^T$. Die momentane Umgebungsänderung $\Delta^T$ kann daher beispielsweise die folgenden Werte umfassen: $\Delta^T$

$$d_1^0 - d_1^T$$

0 0

Sofern diese Umgebungsänderung $\Delta^T$ größer als der vordefinierte Änderungsgrenzwert $\Delta_{lim}$ (z. B. 30cm) ist, was einer signifikanten Umgebungsänderung entspricht, wird das Änderungswarnsignal bereitgestellt und der Fahrer kann beispielsweise mittels einer akustischen/optischen/haptischen Warnung oder durch Aktivieren der (Park-)Bremse oder durch (teilweises) Deaktivierten des Geschwindigkeitsregelbedienelements oder durch Anzeigen des ersten Objekts auf dem Bildschirm auf die veränderte Umgebung aufmerksam gemacht werden.

In Fig. 5 ist eine andere Umgebung des Fahrzeugs 2 zu zwei Unterschiedlichen Zeitpunkten schematisch dargestellt. Das Fahrzeug 2 und dessen Umgebung sind in der Vogelperspektive dargestellt. Diese Darstellung kann auch auf dem Bildschirm des Fahrzeugs 2 dem Fahrer in Echtzeit angezeigt werden. Links ist die Umgebung des Fahrzeugs 2 zu dem Zeitpunkt t=0 dargestellt, zu dem das Fahrzeug 2 sich nicht mehr bewegt und stillsteht oder zu dem die Zündung des Fahrzeugs 2 abgeschaltet wird oder zu dem das Fahrzeug 2 verschlossen wird. Rechts ist die Umgebung des Fahrzeugs 2 zu dem späteren Zeitpunkt t=T dargestellt, zu dem das Fahrzeug 2 noch stillsteht oder zu dem die Zündung des Fahrzeugs 2 angeschaltet wird oder zu dem das Fahrzeug 2 aufgeschlossen wird.

Zum Zeitpunkt t=0 befinden sich drei Objekte 5 in der Umgebung des Fahrzeugs 2. Das erste Objekt 5.1 befindet sich in x-Richtung vor dem Fahrzeug 2 in einem Abstand $d_1^0$. Das zweite Objekt 5.2 befindet sich in (negativer) y-Richtung rechts neben dem Fahrzeug 2 in einem Abstand $d_2^0$. Das dritte Objekt 5.3 befindet sich in (negativer) x-Richtung hinter dem Fahrzeug 2 in einem Abstand $d_3^0$. Der gespeicherte Umgebungsdatensatz kann daher beispielsweise die drei Objekte 5 mit ihren jeweiligen horizontalen, senkrechten Abständen zu dem Fahrzeug 2 (bzw. (der Oberfläche) dessen Karosserie) und Richtungen umfassen:

| Objekt | Richtung | Abstand |
|---|---|---|
| 1 | +x | $d_1^0$ |
| 2 | -y | $d_2^0$ |
| 3 | -x | $d_3^0$ |

Zum Zeitpunkt t=T befinden sich die drei selben Objekte 5 in der Umgebung des Fahrzeugs 2. Zusätzlich befindet sich jedoch ein viertes Objekt 5.4 in der Umgebung des Fahrzeugs 2, nämlich in x-Richtung vor dem Fahrzeug 2, wobei es sich zwischen dem Fahrzeug 2 und dem ersten Objekt 5.1, also näher als das erste Objekt 5.1 an dem Fahrzeug 2 befindet. Der Abstand $d_1^T$ des ersten Objekts 5.1, Abstand $d_2^T$ des zweiten Objekts 5.2 und der Abstand $d_3^T$ des dritten Objekts 5.3 haben sich nicht geändert, $d_1^T=d_1^0$; $d_2^T=d_2^0$; $d_3^T=d_3^0$. Somit ergibt sich für das erste, das zweite und das dritte Objekt 5.1, 5.2, 5.3 keine Umgebungsänderung $\Delta^T$ zum Zeitpunkt t=T. Das vierte Objekt 5.4, welches zum Zeitpunkt t=0 noch nicht in der Umgebung des Fahrzeugs war, befindet sich jedoch nun ebenfalls vor dem Fahrzeug 2 in einem Abstand $d_4^T$ der geringer ist als der Abstand $d_1^T$ des ersten Objekts, $d_4^T<d_1^T$. Somit umfasst der Umgebungsdatensatz zum Zeitpunkt t=T entweder vier Objekte oder, wenn in jeder Richtung nur das jeweils nächste Objekt umfasst ist, drei Objekte, wovon eines neu ist. Der momentane Umgebungsdatensatz kann daher beispielsweise alle vier Objekte 5 mit ihren jeweiligen horizontalen, senkrechten Abständen zu dem Fahrzeug 2 (bzw. (der Oberfläche) dessen Karosserie) und Richtungen umfassen:

| Objekt | Richtung | Abstand |
|---|---|---|
| 1 | +x | $d_1^T$ |
| 2 | -y | $d_2^T$ |
| 3 | -x | $d_3^T$ |
| 4 | +x | $d_4^T$ |

Oder alternativ nur jeweils das nächste Objekt in jeder Richtung mit ihren jeweiligen horizontalen, senkrechten Abständen zu dem Fahrzeug 2 (bzw. (der Oberfläche) dessen Karosserie) und Richtungen:

| Objekt | Richtung | Abstand |
|---|---|---|
| 4 | +x | $d_4^T$ |
| 2 | -y | $d_2^T$ |
| 3 | -x | $d_3^T$ |

Somit ergibt sich im ersten Fall (vier Objekte) keine Umgebungsänderung $\Delta^T$ zum Zeitpunkt t=T, jedoch wird dennoch eine Änderungswarnung bereitgestellt, da sich im Vergleich zum gespeicherten Umgebungsdatensatz (T=0) ein neues Objekt im momentanen Umgebungsdatensatz (t=T) befindet, was einer signifikanten Umgebungsänderung entspricht. Im zweiten Fall ergibt sich eine Umgebungsänderung $\Delta^T$ vor dem Fahrzeug 2 die der Differenz zwischen dem Abstand des ersten Objekts 5.1 zum Zeitpunkt t=0 und dem Abstand des vierten Objekts 5.4 zum Zeitpunkt t=T entspricht, $\Delta^T = d_1^0 - d_4^T$. Die momentane Umgebungsänderung $\Delta^T$ kann daher beispielsweise die folgenden Werte umfassen: $\Delta^T$

$$d_1^0 - d_4^T$$

0 0

Sofern diese Umgebungsänderung $\Delta^T$ größer als der vordefinierte Änderungsgrenzwert $\Delta_{lim}$ (z. B. 30cm) ist, also signifikant ist, wird das Änderungswarnsignal bereitgestellt und der Fahrer kann beispielsweise mittels einer akustischen/optischen/haptischen Warnung oder durch Aktivieren der (Park)Bremse oder durch (teilweises) Deaktivierten des Geschwindigkeitsregelbedienelements oder durch Anzeigen des ersten Objekts auf dem Bildschirm auf die veränderte Umgebung aufmerksam gemacht werden.

Obwohl hier spezifische Ausführungsformen illustriert und beschrieben wurden, ist für den Fachmann ersichtlich, dass es eine Vielzahl von Alternativen und/oder gleichwertigen Implementierungen gibt. Es ist zu würdigen, dass die exemplarischen Ausgestaltungen oder Ausführungsformen nur Beispiele sind und nicht dazu gedacht sind, den Umfang, die Anwendbarkeit oder die Konfiguration in irgendeiner Weise einzuschränken. Vielmehr wird die vorstehende Zusammenfassung und detaillierte Beschreibung dem Fachmann hinreichende Anweisungen für die Umsetzung von mindestens einer bevorzugten Ausführungsform liefern, wobei es sich versteht, dass verschiedene Änderungen in der Funktion und Anordnung der Elemente, die in einer beispielhaften Ausgestaltung beschrieben werden, nicht von dem in den beigefügten Ansprüchen und ihren rechtlichen äquivalenten dargelegten Anwendungsbereich hinausführen. In der Regel ist diese Anmeldung dazu gedacht, alle Anpassungen oder Variationen der hier diskutierten spezifischen Ausführungsformen abzudecken.

In der vorstehenden ausführlichen Beschreibung wurden verschiedene Merkmale in einem oder mehreren Beispielen zusammengefasst, um die Offenbarung knapp zu halten. Es versteht sich, dass die obige Beschreibung illustrativ und nicht restriktiv sein soll. Sie soll alle Alternativen, Änderungen und äquivalente abdecken, die im Rahmen der Erfindung enthalten sein können. Viele andere Beispiele werden einem Fachmann bei dem Studium der obigen Offenbarung offensichtlich werden.

Um ein umfassendes Verständnis der Erfindung zu ermöglichen, wird eine spezifische Nomenklatur verwendet, die in der vorstehenden Offenbarung verwendet wurde. Es wird jedoch für einen Fachmann im Lichte der darin enthaltenen Spezifikation ersichtlich sein, dass die spezifischen Details nicht erforderlich sind, um die Erfindung anzuwenden. So werden die vorstehenden Beschreibungen spezieller Ausführungsformen der vorliegenden Erfindung zu Illustrations- und Beschreibungszwecken dargestellt. Sie sind nicht dazu gedacht, erschöpfend zu sein oder die Erfindung auf die oben offenbarten genauen Ausführungsformen zu beschränken; offensichtlich sind viele Modifikationen und Variationen im Hinblick auf die oben genannten Lehren möglich. Die Ausführungsformen wurden ausgewählt und beschrieben, um die Grundsätze der Erfindung und ihre praktischen Anwendungen am besten zu erklären und um somit anderen Fachkräften die Möglichkeit zu geben, die Erfindung und verschiedene Ausführungsformen mit verschiedenen Modifikationen, sowie es für die jeweilige Verwendung geeignet erscheint, am besten anzuwenden. In der gesamten Spezifikation werden die Begriffe "einschließlich" und "in welchem/welcher" als Äquivalente der jeweiligen Begriffe "umfassend" bzw. "worin" verwendet. Darüber hinaus werden die Begriffe "erster/erste/erstes", "zweiter/zweite/zweites", "dritter, dritte, drittes" usw. lediglich als Bezeichnung verwendet und sind nicht dazu gedacht, numerische Anforderungen an die Objekte zu stellen oder eine bestimmte Rangfolge vorzugeben. Im Zusammenhang mit der vorliegenden Beschreibung und den Ansprüchen ist die Verbindung "oder" als Aufnahme ("und/oder") zu verstehen und nicht exklusiv ("entweder... oder").

Bezugszeichenliste

1    Fahrerassistenzsystem
2    Fahrzeug
3    interner Sensor
4    externe Entität
5    Objekte
11   Schnittstellenmodul
12   Vergleichsmodul
13   Änderungswarnmodul
14   Warnungsmodul
15   Bremsmodul
16   Anzeigemodul

**Patentansprüche**

1. Verfahren zum Erkennen von Änderungen einer Umgebung eines Fahrzeugs (2), ausgeführt von einem Fahrerassistenzsystem (1) des Fahrzeugs (2), umfassend die Schritte:

   a) kontinuierliches Erzeugen oder Empfangen von Umgebungsdatensätzen während das Fahrzeug (2) stillsteht;
   b) kontinuierliches Berechnen einer momentanen Umgebungsänderung Δt durch kontinuierliches Vergleichen des momentan im Stillstand erzeugten oder empfangenen Umgebungsdatensatzes mit einem gespeicherten Umgebungsdatensatz, welcher im Moment des Stillstehens des Fahrzeugs (2) erzeugt oder empfangen und gespeichert wurde; und
   c) Bereitstellen eines Änderungswarnsignals bei einem Einschalten einer Zündung des Fahrzeugs (2) oder bei einem Öffnen des Fahrzeugs (2) durch einen nicht im Fahrzeug befindlichen Fahrer, wenn die berechnete momentane Umgebungsänderung Δt einen vordefinierten Änderungsgrenzwert Δlim überschreitet, Δt > Δlim.

2. Verfahren gemäß Anspruch 1, wobei die Umgebungsdatensätze empfangen und die momentane Umgebungsänderung Δt berechnet werden, während eine Zündung des Fahrzeugs (2) abgeschaltet ist und/oder während das Fahrzeug (2) verschlossen ist.

3. Verfahren gemäß Anspruch 1 oder 2, wobei die Umgebungsdatensätze von wenigstens einem internen Sensor (3) des Fahrzeugs (2) und/oder von wenigstens einer externen Entität (4) empfangen werden.

4. Verfahren gemäß einem der vorherigen Ansprüche, ferner umfassend wenigstens einen der Schritte:

d) Ausgeben einer akustischen und/oder optischen und/oder haptischen Warnung an einen Fahrer des Fahrzeugs (2), wenn das Änderungswarnsignal vorliegt;

e) Aktivieren einer Bremse, insbesondere einer Parkbremse, des Fahrzeugs (2) und/oder zumindest teilweises Deaktivieren eines Geschwindigkeitsregelbedienelements des Fahrzeugs (2), wenn das Änderungswarnsignal vorliegt; und

f) Anzeigen zumindest des Objekts (5), welches das Änderungswarnsignal hervorgerufen hat, auf einem Bildschirm des Fahrzeugs (2), wenn das Änderungswarnsignal vorliegt.

5. Verfahren gemäß einem der vorherigen Ansprüche, wobei die Umgebungsdaten zumindest den jeweils im Wesentlichen senkrechten, horizontalen Abstand einer Karosserie des Fahrzeugs (2) zu Objekten (5) in einem Umfeld von 360° um das Fahrzeug (2) umfassen.

6. Verfahren gemäß einem der vorherigen Ansprüche, wobei die Umgebungsdaten eine vordefinierte Anzahl an nächstgelegenen Objekten (5) mit deren jeweiliger Position relativ zu dem Fahrzeug (2) umfassen.

7. Verfahren gemäß Anspruch 6,

wobei für jedes Objekt (5) in dem gespeicherten Umgebungsdatensatz eine Abstandsänderung $\Delta$di durch Vergleichen dessen jeweiliger Position in dem gespeicherten Umgebungsdatensatz mit dessen entsprechender Position in dem momentan empfangenen Umgebungsdatensatz als die momentane Umgebungsänderung berechnet wird; und wobei in dem Schritt c) das Änderungswarnsignal bereitgestellt wird, wenn eine der berechneten Abstandsänderungen $\Delta$di den vordefinierten Umgebungsänderungsgrenzwert $\Delta$lim überschreitet, $\Delta$di > $\Delta$lim.

8. Verfahren gemäß einem der vorherigen Ansprüche, wobei jeweils ein Konfidenzintervall den erzeugten oder empfangenen Umgebungsdatensätzen hinzugefügt wird, das eine Güte der jeweiligen Umgebungsdatensätze und/oder der darin enthaltenen Objekte (5) bewertet.

9. Verfahren gemäß einem der Ansprüche 6 bis 8, wobei das Änderungswarnsignal zusätzlich bereitgestellt wird, wenn in dem momentan empfangenen Umgebungsdatensatz wenigstens ein anderes Objekt (5) umfasst ist als in dem gespeicherten Umgebungsdatensatz.

10. Verfahren gemäß einem der vorherigen Ansprüche, ferner umfassend den Schritt:
g) kontinuierliches Ermitteln von Umgebungsdatensätzen mittels wenigstens eines ersten internen Sensors (3) des Fahrzeugs (2) während das Fahrzeug (2) stillsteht oder, sofern abhängig von Anspruch 2, während die Zündung des Fahrzeugs (2) abgeschaltet ist und/oder während das Fahrzeug (2) verschlossen ist.

11. Verfahren gemäß Anspruch 10,
wobei, wenn die berechnete momentane Umgebungsänderung $\Delta$t den vordefinierten Änderungsgrenzwert $\Delta$lim überschreitet, die Umgebungsdatensätze zusätzlich mittels wenigstens eines zweiten internen Sensors (3) des Fahrzeugs (2) und/oder mit einer höheren Abtastrate ermittelt werden.

12. Verfahren gemäß einem der vorherigen Ansprüche, ferner umfassend den Schritt:
h) Empfangen und Speichern eines Umgebungsdatensatzes als den gespeicherten Umgebungsdatensatz zu dem Zeitpunkt, t=0, zu dem das Fahrzeug (2) stillsteht.

13. Fahrerassistenzsystem (1) zum Erkennen von Änderungen einer Umgebung eines Fahrzeugs (2), umfassend Mittel zum Ausführen der Schritte des Verfahrens gemäß einem der vorherigen Ansprüche.

14. Fahrzeug (2), umfassend:
das Fahrerassistenzsystem (1) gemäß Anspruch 13.

**Claims**

1. A method for detecting changes in the surroundings of a vehicle (2), carried out by a driver assistance system (1) of the vehicle (2), comprising the steps of:

a) continuously generating or receiving environmental data records while the vehicle (2) is stationary;

b) continuously calculating an instantaneous surroundings change $\Delta$t by continuously comparing the surroundings data record generated or received instantaneously at a standstill with a stored surroundings data record that was generated or received and stored at the moment when the vehicle (2) was stationary; and

c) providing a change warning signal when an ignition of the vehicle (2) is switched on or when the vehicle (2) is opened by a driver who is not in the vehicle if the calculated instantaneous surroundings change $\Delta$t exceeds a predefined change limit value $\Delta$lim, $\Delta$t > $\Delta$lim.

**2.** The method according to claim 1,
wherein the surroundings data records are received and the instantaneous surroundings change $\Delta t$ is calculated while an ignition of the vehicle (2) is switched off and/or while the vehicle (2) is locked.

**3.** The method according to claim 1 or 2,
wherein the surroundings data records are received from at least one internal sensor (3) of the vehicle (2) and/or from at least one external entity (4).

**4.** The method according to any one of the preceding claims, further comprising at least one of the steps of:

d) outputting an audible and/or optical and/or haptic warning to a driver of the vehicle (2) if the change warning signal is present;
e) activating a brake, in particular a parking brake, of the vehicle (2) and/or at least partially deactivating a cruise control element of the vehicle (2) if the change signal is present; and
f) displaying at least the object (5) which has caused the change warning signal on a screen of the vehicle (2) if the change warning signal is present.

**5.** The method according to any one of the preceding claims,
wherein the surroundings data comprise at least the respectively substantially vertical, horizontal distance of a body of the vehicle (2) from objects (5) in an environment of 360° around the vehicle (2).

**6.** The method according to any one of the preceding claims,
wherein the surroundings data comprise a predefined number of closest objects (5) with their respective position relative to the vehicle (2).

**7.** The method according to claim 6,

wherein a distance change $\Delta d_i$ is calculated as the instantaneous surroundings change for each object (5) in the stored surroundings data record by comparing its respective position in the stored surroundings data record with its corresponding position in the instantaneously received surroundings data record; and
wherein in step c) the change warning signal is provided if one of the calculated distance changes $\Delta d_i$ exceeds the predefined surroundings change limit value $\Delta \lim$, $\Delta d_i > \Delta \lim$.

**8.** The method according to any one of the preceding claims,
wherein a confidence interval that assesses a quality of the respective surroundings data records and/or of the objects (5) contained therein is added to each of the generated or received surroundings data records.

**9.** The method according to any one of claims 6 to 8,
wherein the change warning signal is additionally provided if the momentarily received surroundings data record comprises at least one other object (5) than the stored surroundings data record.

**10.** The method according to any one of the preceding claims, further comprising the step of:
g) continuously determining surroundings data records by means of at least one first internal sensor (3) of the vehicle (2) while the vehicle (2) is at a standstill or, if depending on claim 2, while the ignition of the vehicle (2) is switched off and/or while the vehicle (2) is locked.

**11.** The method according to claim 10,
wherein, if the calculated instantaneous environmental change $\Delta t$ exceeds the predefined change limit value $\Delta \lim$, the environmental data records are additionally determined by means of at least one second internal sensor (3) of the vehicle (2) and/or at a higher sampling rate.

**12.** The method according to any one of the preceding claims, further comprising the step of:
h) receiving and storing a surroundings data record as the stored surroundings data record at the time, t=0, at which the vehicle (2) is at a standstill.

**13.** A driver assistance system (1) for detecting changes in the surroundings of a vehicle (2), comprising means for performing the steps of the method according to any one of the preceding claims.

**14.** A vehicle (2), comprising:
the driver assistance system (1) according to claim 13.

**Revendications**

**1.** Procédé de détection de changements dans l'environnement d'un véhicule (2), réalisé par un système d'assistance à la conduite (1) du véhicule (2), comprenant les étapes :

a) de génération ou de réception en continu des données environnementales pendant que le véhicule (2) est à l'arrêt ;
b) de calcul en continu d'un changement environnemental momentané $\Delta t$ par la comparaison continue de l'ensemble de données environnementales momentanément généré ou reçu à l'arrêt avec un ensemble de données environnementales stockées qui a été généré ou reçu et stocké au moment où le véhicule (2) était à l'arrêt ; et

c) de fourniture d'un signal d'avertissement de changement lorsque le contact du véhicule (2) est mis ou lorsque le véhicule (2) est ouvert par un conducteur ne se trouvant pas dans le véhicule, si le changement environnemental momentané calculé $\Delta t$ dépasse une valeur limite de changement prédéfinie $\Delta lim$, $\Delta t > \Delta lim$.

2. Procédé selon la revendication 1,
dans lequel les ensembles de données environnementales sont reçus et le changement environnemental momentané $\Delta t$ est calculé pendant que le contact du véhicule (2) est coupé et/ou pendant que le véhicule (2) est verrouillé.

3. Procédé selon la revendication 1 ou 2,
dans lequel les ensembles de données environnementales sont reçus d'au moins un capteur interne (3) du véhicule (2) et/ou d'au moins une entité externe (4).

4. Procédé selon l'une des revendications précédentes, comprenant également au moins l'une des étapes :

d) d'émission d'un avertissement acoustique et/ou optique et/ou haptique à un conducteur du véhicule (2) lorsque le signal d'avertissement de changement est présent ;
e) d'activation d'un frein, en particulier d'un frein de stationnement, du véhicule (2) et/ou de désactivation au moins partielle d'un élément de régulateur de vitesse du véhicule (2) lorsque le signal d'avertissement de changement est présent ; et
f) d'affichage au moins de l'objet (5) qui a provoqué le signal d'avertissement de changement sur un écran du véhicule (2) lorsque le signal d'avertissement de changement est présent.

5. Procédé selon l'une des revendications précédentes,
dans lequel les données environnementales comprennent au moins la distance respectivement sensiblement verticale et horizontale d'une carrosserie du véhicule (2) à des objets (5) dans une zone environnante de 360° autour du véhicule (2).

6. Procédé selon l'une des revendications précédentes,
dans lequel les données environnementales comprennent un nombre prédéfini d'objets les plus proches (5) avec leurs positions respectives par rapport au véhicule (2).

7. Procédé selon la revendication 6,

dans lequel, pour chaque objet (5) dans l'ensemble de données environnementales stockées, un changement de distance $\Delta di$ est calculé comme le changement environnemental momentané par la comparaison de sa position respective dans l'ensemble de données environnementales stockées avec sa position correspondante dans l'ensemble de données environnementales momentanément reçu ; et dans lequel, à l'étape c), le signal d'avertissement de changement est fourni si l'un des changements de distance calculés $\Delta di$ dépasse la valeur limite de changement environnemental prédéfinie $\Delta lim$, $\Delta di > \Delta lim$.

8. Procédé selon l'une des revendications précédentes,
dans lequel un intervalle de confiance respectif est ajouté aux ensembles de données environnementales générés ou reçus, lequel intervalle évalue une qualité des ensembles de données environnementales respectifs et/ou des objets (5) qu'ils contiennent.

9. Procédé selon l'une des revendications 6 à 8,
dans lequel le signal d'avertissement de changement est également fourni si l'ensemble de données environnementales momentanément reçu comprend au moins un objet différent (5) de l'ensemble de données environnementales stocké.

10. Procédé selon l'une des revendications précédentes, comprenant également l'étape :
g) de détermination en continu des ensembles de données environnementales au moyen d'au moins un premier capteur interne (3) du véhicule (2) pendant que le véhicule (2) est à l'arrêt ou, s'il dépend de la revendication 2, pendant que le contact du véhicule (2) est coupé et/ou pendant que le véhicule (2) est verrouillé.

11. Procédé selon la revendication 10,
dans lequel, si le changement environnemental momentané calculé $\Delta t$ dépasse la valeur limite de changement prédéfinie $\Delta lim$, les ensembles de données environnementales sont également déterminés au moyen d'au moins un second capteur interne (3) du véhicule (2) et/ou avec un taux d'échantillonnage plus élevé.

12. Procédé selon l'une des revendications précédentes, comprenant également l'étape :
h) de réception et de stockage d'un ensemble de données environnementales en tant qu'ensemble de données environnementales stocké à l'instant t=0 auquel le véhicule (2) est à l'arrêt.

13. Système d'assistance à la conduite (1) pour détecter des changements d'un environnement d'un véhicule (2), comprenant des moyens pour mettre en œuvre les étapes du procédé selon l'une des revendications précédentes.

14. Véhicule (2), comprenant :
le système d'assistance à la conduite (1) selon la revendication 13.

FIG 1

FIG 2

FIG 3

FIG 4

$d_3^0$   $d_1^0$   $d_2^0$   $t=0 \longrightarrow t=T$   $d_3^T$   $d_1^T$   $d_2^T$

FIG 5

$d_3^0$   $d_1^0$   $d_2^0$   $t=0 \longrightarrow t=T$   $d_3^T$   $d_4^T$   $d_2^T$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018222683 A1
- DE 102012014939 A1
- US 2019111835 A1